# EUROPEAN PATENT APPLICATION

(11) **EP 4 808 198 A1**
(43) Date of publication of application: **16.09.2026**
(21) Application number: 24896335.7
(22) Date of filing: 19.11.2024
(51) Int. Cl.: H04W 28/02

(54) **COMMUNICATION METHOD AND COMMUNICATION APPARATUS**

(30) Priority: 29.11.2023 CN 202311627133
(71) Applicant: Huawei Technologies Co., Ltd., Shenzhen, Guangdong 518129 (CN)
(72) Inventor: YOU, Chunhua, Shenzhen, Guangdong 518129 (CN); LU, Yujiao, Shenzhen, Guangdong 518129 (CN); TAN, Zhiyuan, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2024/132898
(87) International publication number: WO 2025/113244

(57) **Abstract**

This application provides a communication method. The method includes: obtaining a predicted network transmission capability and a predicted data feature for data of a first terminal device; and determining, based on the predicted network transmission capability and the predicted data feature, whether to control current data of the first terminal device. By using predicted future information for the data of the first terminal device, the method proactively adjusts current data transmission of the first terminal device when needed, thereby reducing the probability of packet loss or long delays due to future network performance deterioration.

## Description

This application claims priority to Chinese Patent Application No. 202311627133.7, filed with the China National Intellectual Property Administration on November 29, 2023 and entitled "COMMUNICATION METHOD AND COMMUNICATION APPARATUS", which is incorporated herein by reference in its entirety.

### TECHNICAL FIELD

This application relates to the field of wireless communication, and more specifically, to a communication method and a communication apparatus.

### BACKGROUND

5th generation (5th generation, 5G) communication is the next-generation global wireless standard following 4th generation (4th generation, 4G) communication, aiming to accelerate data rates, reduce latency, support more users, devices, and services, and improve network efficiency. Extended reality (extended reality, XR) combines reality and virtuality through computers to create a virtual, immersive human-machine interaction environment. XR encompasses technologies such as augmented reality (augmented reality, AR), virtual reality (virtual reality, VR), and mixed reality (mixed reality, MR), providing seamless transitions between virtual and real worlds. XR services are bandwidth-intensive and latency-sensitive.

Specifically, 5G networks are well-suited to XR service requirements. However, network performance degradation causes frame loss or frame freezing, degrading XR service experience. Therefore, how to improve user experience of the XR service becomes an urgent problem to be resolved.

### SUMMARY

This application provides a communication method to reduce the probability of packet loss or delay and improve user experience.

According to a first aspect, a communication method is provided. The method may be performed by a first communication apparatus, or may be performed by a component (for example, a chip or a circuit) of the first communication apparatus. This is not limited in this application. Optionally, the first communication apparatus may be an access network device, or the first communication apparatus may be a core network device (for example, a user plane function (user plane function, UPF) network element).

The method may include: obtaining a predicted network transmission capability for data of a first terminal device; obtaining a predicted data feature for the data of the first terminal device; and determining, based on the predicted network transmission capability and the predicted data feature, to control current data of the first terminal device. The first terminal device may be any terminal device.

Based on the foregoing technical solution, the first communication apparatus may obtain the predicted network transmission capability and the predicted data feature. In addition, the first communication apparatus may determine, based on the obtained predicted network transmission capability and the obtained predicted data feature, whether the current data of the first terminal device needs to be controlled. Therefore, the first communication apparatus may determine, based on predicted future information (for example, a network transmission capability and a data feature in a future period of time) for the data of the first terminal device, whether transmission of the current data of the first terminal device needs to be actively adjusted in advance, so that a probability that packet loss or a delay occurs can be reduced in a case of network congestion, and service experience of a terminal device can be improved in a case of no network congestion.

With reference to the first aspect, in some implementations of the first aspect, the predicted network transmission capability includes at least one of the following: a predicted network transmission assurance capability for a rate, a packet loss rate, or a delay of the data of the first terminal device.

The predicted network transmission capability may be the predicted network transmission assurance capability for the rate, the packet loss rate, or the delay of the data of the first terminal device. In other words, in a process of predicting a network transmission capability in a future period of time, different requirements (for example, at least one of requirements such as a rate, a packet loss rate, or a delay (for example, a delay gradient)) of the data of the first terminal device are considered, so that the predicted network transmission capability can accurately reflect whether data transmission assurance of the first terminal device is met.

With reference to the first aspect, in some implementations of the first aspect, the predicted network transmission capability includes a predicted first network transmission capability and/or a predicted second network transmission capability, where the first network transmission capability is a network transmission capability between an access network device and the first terminal device, and the second network transmission capability is a network transmission capability between the access network device and a core network device.

The predicted network transmission capability includes but is not limited to the predicted first network transmission capability and/or the predicted second network transmission capability. In this technical solution, in a process of predicting a network transmission capability in a future period of time, a network transmission capability between the access network device and the terminal device may be considered, and a network transmission capability between the access network device and the core network device may also be considered, so that the predicted network transmission capability can more accurately reflect a transmission assurance capability of an entire communication network.

With reference to the first aspect, in some implementations of the first aspect, the obtaining the predicted network transmission capability includes: determining the first network transmission capability and/or the second network transmission capability; or receiving first prediction information and/or second prediction information, where the first prediction information indicates the first network transmission capability, and the second prediction information indicates the second network transmission capability; determining the first network transmission capability, and receiving second prediction information; or determining the second network transmission capability, and receiving first prediction information.

Based on the foregoing technical solution, the first communication apparatus may obtain the predicted network transmission capability in different manners. For example, the first communication apparatus may determine the predicted network transmission capability. For another example, the first communication apparatus may receive the predicted network transmission capability from another communication apparatus. In this technical solution, a manner in which the first communication apparatus obtains the predicted network transmission capability is not limited, thereby improving flexibility of the solution.

With reference to the first aspect, in some implementations of the first aspect, the determining the first network transmission capability includes: determining the first network transmission capability based on one or more of the following information: a radio environment in which the first terminal device is located, channel quality of the first terminal device, a radio scheduling capability of the access network device for the data of the first terminal device, a software processing resource or a hardware processing resource of the access network device for the data of the first terminal device, or a quantity of terminal devices connected to the access network device, where the first terminal device is one of the terminal devices connected to the access network device.

Based on the foregoing technical solution, if the first communication apparatus determines the first network transmission capability, the first communication apparatus may determine the first network transmission capability based on different information. In this way, the first network transmission capability determined by the first communication apparatus can be more accurate.

With reference to the first aspect, in some implementations of the first aspect, the determining the second network transmission capability includes: determining the second network transmission capability based on one or more of the following information: a forwarding capability of the core network device for the data of the first terminal device, a software processing resource or a hardware processing resource of the core network device for the data of the first terminal device, or a quantity of terminal devices managed by the core network device, where the first terminal device is one of the terminal devices managed by the core network device.

Based on the foregoing technical solution, if the first communication apparatus determines the second network transmission capability, the first communication apparatus may determine the second network transmission capability based on different information. In this way, the second network transmission capability determined by the second communication apparatus can be more accurate.

With reference to the first aspect, in some implementations of the first aspect, before receiving the first prediction information, the method further includes: sending a first message, where the first message indicates to report the first prediction information.

Based on the foregoing technical solution, if the first communication apparatus receives the first prediction information from another communication apparatus (for example, a second communication apparatus), where the first prediction information indicates the first network transmission capability, to cause the second communication apparatus to accurately learn of a requirement that the first communication apparatus needs to obtain the first prediction information, the first communication apparatus may indicate, by using the first message, the second communication apparatus to report the first prediction information.

With reference to the first aspect, in some implementations of the first aspect, before receiving the second prediction information, the method further includes: sending a second message, where the second message indicates to report the second prediction information.

Based on the foregoing technical solution, if the first communication apparatus receives the second prediction information from another communication apparatus (for example, a second communication apparatus), where the second prediction information indicates the second network transmission capability, to cause the second communication apparatus to accurately learn of a requirement that the first communication apparatus needs to obtain the second prediction information, the first communication apparatus may indicate, by using the second message, the second communication apparatus to report the second prediction information.

With reference to the first aspect, in some implementations of the first aspect, the obtaining the predicted data feature includes: determining the predicted data feature; or receiving third prediction information, where the third prediction information indicates the predicted data feature.

Based on the foregoing technical solution, the first communication apparatus may obtain the predicted data feature in different manners. For example, the first communication apparatus may determine the predicted data feature. For another example, the first communication apparatus may receive the predicted data feature from another communication apparatus. In this technical solution, a manner in which the first communication apparatus obtains the predicted data feature is not limited, thereby improving flexibility of the solution.

With reference to the first aspect, in some implementations of the first aspect, before receiving the third prediction information, the method further includes: sending a third message, where the third message indicates to report the third prediction information.

Based on the foregoing technical solution, if the first communication apparatus receives the third prediction information from another communication apparatus (for example, a second communication apparatus), where the third prediction information indicates the predicted data feature, to cause the second communication apparatus to accurately learn of a requirement that the first communication apparatus needs to obtain the predicted data feature, the first communication apparatus may indicate, by using the third message, the second communication apparatus to report the third prediction information.

With reference to the first aspect, in some implementations of the first aspect, the determining the predicted data feature includes: determining the predicted data feature based on a data feature of historical data of the first terminal device and a prediction algorithm.

Based on the foregoing technical solution, if the first communication apparatus determines the predicted data feature, the first communication apparatus may determine the predicted data feature based on the data feature of the historical data of the first terminal device and the prediction algorithm. In other words, in a process of determining the predicted data feature, the first communication apparatus considers both the data feature of the historical data of the first terminal device and the prediction algorithm, to determine the predicted data feature more accurately.

With reference to the first aspect, in some implementations of the first aspect, the predicted data feature includes a predicted first rate, a predicted first packet loss rate, or a predicted first average delay related to the data of the first terminal device.

With reference to the first aspect, in some implementations of the first aspect, the determining, based on the predicted network transmission capability and the predicted data feature, to control the current data of the first terminal device includes: determining to control the current data of the first terminal device when it is determined, based on the predicted network transmission capability and the predicted data feature, that the predicted network transmission capability cannot guarantee a requirement of the predicted data feature.

Based on the foregoing technical solution, when the predicted network transmission capability cannot guarantee the requirement of the predicted data feature, the first communication apparatus may determine that the current data of the first terminal device needs to be controlled, thereby reducing that the probability of packet loss or long delays for the first terminal device because the network transmission capability cannot ensure the requirement of the predicted data feature.

With reference to the first aspect, in some implementations of the first aspect, the method further includes: performing an operation of controlling the current data of the first terminal device; or sending control information, where the control information indicates to control the current data of the first terminal device.

Based on the foregoing technical solution, a device that performs the operation of controlling the current data of the first terminal device may be the first communication apparatus, or may be another communication apparatus. When the another communication apparatus performs the operation of controlling the current data of the first terminal device, the first communication apparatus may indicate, by using the control information, the another communication apparatus to control the current data of the first terminal device. In other words, in this technical solution, different communication apparatuses may perform the operation of controlling the current data of the first terminal device, to improve flexibility of the solution.

With reference to the first aspect, in some implementations of the first aspect, the performing the operation of controlling the current data of the first terminal device includes: delaying delivery of the current data of the first terminal device; or discarding the current data of the first terminal device; or discarding feedback information for the current data of the first terminal device.

Based on the foregoing technical solution, performing the operation of controlling the current data of the first terminal device includes but is not limited to: delaying delivery of some data or discarding some data, thereby reducing the probability of long delays or packet loss for the first terminal device.

With reference to the first aspect, in some implementations of the first aspect, the control information includes at least one of the following information: rate information, delay amount information, or packet loss amount information.

Based on the foregoing technical solution, if the first communication apparatus indicates, by using the control information, the another communication apparatus to perform the operation of controlling the current data of the first terminal device, corresponding information may be carried in the control information, to indicate the another communication apparatus to adjust a rate, a delay, packet loss, or the like of the data of the first terminal device. The control information may indicate the another communication apparatus to adjust different parameters, to improve flexibility of the solution.

If the control information includes rate control information, the control information indicates to control a rate of the current data of the first terminal device. In a possible implementation, the rate control information is the rate information. The second communication apparatus actively reduces the rate of the current data of the first terminal device, so that the rate of the current data of the first terminal device is less than or equal to a rate indicated by the rate information; and/or
if the control information includes delay control information, the control information indicates to control a delay of the current data of the first terminal device. In a possible implementation, the control information is the delay amount information. The second communication apparatus actively delays delivering the current data of the first terminal device, so that a delay gradient of the current data of the first terminal device or a delay (an end-to-end delay) of the current data of the first terminal device additionally includes a delay indicated by the delay amount information, where the delay gradient may be understood as a difference between delays of different data (for example, a delay of data #1 is D1, a delay of data #2 is D2, and a delay gradient is D2-D1); and/or
if the control information includes packet loss control information, the control information indicates to control packet loss of the current data of the first terminal device. In a possible implementation, the control information is the packet loss amount information. The second communication apparatus actively discards the current data of the first terminal device or feedback information for the current data, so that an accumulative packet loss amount of the data of the first terminal device additionally includes a packet loss amount indicated by the packet loss amount information (for example, if a previous packet loss amount of the data of the first terminal device is P1, and the packet loss amount indicated by the packet loss amount information is P2, the accumulative packet loss amount of the data of the first terminal device is P1+P2).

According to a second aspect, a communication method is provided. The method may be performed by a second communication apparatus, or may be performed by a component (for example, a chip or a circuit) of the second communication apparatus. This is not limited in this application. Optionally, the second communication apparatus may be an access network device, the second communication apparatus may be a core network device (for example, a UPF network element), or the second communication apparatus may be a terminal device.

The method may include: receiving control information, where the control information indicates to control current data of a first terminal device; and controlling a rate, a delay, or packet loss of the current data of the first terminal device based on the control information, where the control information is determined based on a predicted network transmission capability for data of the first terminal device and a predicted data feature for the data of the first terminal device.

Based on the foregoing technical solution, after receiving the control information, the second communication apparatus may actively control the rate, the delay, or the packet loss of the current data of the first terminal device based on the control information. In addition, the control information is determined based on predicted future information (for example, a network transmission capability and a data feature in a future period of time) for the data of the first terminal device, which is equivalent to actively adjusting transmission of the current data of the first terminal device in advance based on the predicted future information, so that a probability that packet loss or a delay occurs can be reduced in a case of network congestion, and service experience of a terminal device can be improved in a case of no network congestion.

With reference to the second aspect, in some implementations of the second aspect, the control information includes at least one of the following information: rate information, delay amount information, or packet loss amount information.

With reference to the second aspect, in some implementations of the second aspect, if the control information includes the rate information, the method further includes: controlling the rate of the current data of the first terminal device to be less than or equal to a rate indicated by the rate information; and/or if the control information includes the delay amount information, the method further includes: delaying delivery of the current data of the first terminal device, so as to control the delay of the current data of the first terminal device to be greater than or equal to a delay indicated by the delay amount information; and/or, if the control information includes the packet loss amount information, the method further includes: discarding the current data of the first terminal device, discarding feedback information for the current data of the first terminal device, or sending a negative acknowledgment NACK of the current data of the first terminal device, so as to control the packet loss amount of the current data of the first terminal device to be greater than or equal to a packet loss amount indicated by the packet loss amount information.

With reference to the second aspect, in some implementations of the second aspect, the method further includes: receiving a first message, where the first message indicates to report first prediction information, the first prediction information indicates a first network transmission capability, and the first network transmission capability is a predicted network transmission capability that is of an access network device and that is for the data of the first terminal device; and sending the first prediction information.

With reference to the second aspect, in some implementations of the second aspect, the method further includes: determining the first network transmission capability based on one or more of the following information: a radio environment in which the first terminal device is located, channel quality of the first terminal device, a radio scheduling capability of the access network device for the data of the first terminal device, a software processing resource or a hardware processing resource of the access network device for the data of the first terminal device, or a quantity of terminal devices connected to the access network device, where the first terminal device is one of the terminal devices connected to the access network device.

With reference to the second aspect, in some implementations of the second aspect, the method further includes: receiving a second message, where the second message indicates to report second prediction information, the second prediction information indicates a second network transmission capability, and the second network transmission capability is a predicted network transmission capability that is of a core network device and that is for the data of the first terminal device; and sending the second prediction information.

With reference to the second aspect, in some implementations of the second aspect, the method further includes: determining the second network transmission capability based on one or more of the following information: a forwarding capability of the core network device for the data of the first terminal device, a software processing resource or a hardware processing resource of the core network device for the data of the first terminal device, or a quantity of terminal devices managed by the core network device, where the first terminal device is one of the terminal devices managed by the core network device.

With reference to the second aspect, in some implementations of the second aspect, the method further includes: receiving a third message, where the third message indicates to report third prediction information, and the third prediction information indicates the predicted data feature for the data of the first terminal device.

With reference to the second aspect, in some implementations of the second aspect, the method further includes: determining the predicted data feature based on a data feature of historical data of the first terminal device and a prediction algorithm.

With reference to the second aspect, in some implementations of the second aspect, the predicted data feature includes a predicted first rate, a predicted first packet loss rate, or a predicted first delay related to the data of the first terminal device.

For technical effects of the method shown in the second aspect and the possible designs of the second aspect, refer to the technical effects in the first aspect and the possible designs of the first aspect.

According to a third aspect, a communication apparatus is provided. The apparatus is configured to perform the method according to the first aspect. Specifically, the communication apparatus may include units and/or modules, for example, a processing unit and an obtaining unit, configured to perform the method provided in any one of the foregoing implementations of the first aspect.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a fourth aspect, a communication apparatus is provided. The apparatus is configured to perform the method according to the second aspect. Specifically, the communication apparatus may include units and/or modules, for example, a processing unit and an obtaining unit, configured to perform the method provided in the second aspect.

In an implementation, a transceiver unit may be a transceiver or an input/output interface, and the processing unit may be at least one processor. Optionally, the transceiver may be a transceiver circuit. Optionally, the input/output interface may be an input/output circuit.

In another implementation, a transceiver unit may be an input/output interface, an interface circuit, an output circuit, an input circuit, a pin, a related circuit, or the like on a chip, a chip system, or a circuit; and the processing unit may be at least one processor, a processing circuit, a logic circuit, or the like.

According to a fifth aspect, this application provides a processor, configured to perform the method provided in any one of the implementations of the first aspect and the second aspect.

Operations such as sending and obtaining/receiving related to the processor may be understood as operations such as output and receiving or input of the processor, or operations such as receiving and sending performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code executed by a device, and the program code is used to perform the method in any one of the implementations of the first aspect and the second aspect.

According to a seventh aspect, a computer program product including instructions is provided. When the computer program product runs on a computer, the computer is caused to perform the method in any one of the implementations of the first aspect and the second aspect.

According to an eighth aspect, a chip is provided. The chip includes a processor and a communication interface, and the processor reads, through the communication interface, instructions stored in a memory, to perform the method in any one of the implementations of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method in any one of the implementations of the first aspect and the second aspect.

According to a ninth aspect, a communication system is provided, including the communication apparatus according to the third aspect and/or the communication apparatus according to the fourth aspect.

### BRIEF DESCRIPTION OF DRAWINGS

FIG. 1 is a diagram of a network architecture to which an embodiment of this application is applicable;
FIG. 2 is a schematic flowchart of a communication method according to an embodiment of this application;
FIG. 3 is a diagram of a network architecture according to an embodiment of this application;
FIG. 4 is a schematic flowchart of another communication method according to an embodiment of this application;
FIG. 5 is a diagram of another network architecture according to an embodiment of this application;
FIG. 6 is a schematic flowchart of still another communication method according to an embodiment of this application;
FIG. 7 is a diagram of still another network architecture according to an embodiment of this application;
FIG. 8 is a schematic flowchart of still another communication method according to an embodiment of this application;
FIG. 9 is a diagram of still another network architecture according to an embodiment of this application;
FIG. 10 is a schematic flowchart of still another communication method according to an embodiment of this application;
FIG. 11 is a block diagram of a communication apparatus according to an embodiment of this application;
FIG. 12 is a diagram of another communication apparatus according to an embodiment of this application; and
FIG. 13 is a diagram of a chip system according to an embodiment of this application.

### DESCRIPTION OF EMBODIMENTS

For ease of understanding of embodiments of this application, the following several descriptions are provided first.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Second, "at least one" shown in this application means one or more, and "a plurality of" means two or more. In addition, in embodiments of this application, "first", "second", and various numeric numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not be construed as any limitation on implementation processes of embodiments of this application. It should be understood that, objects described in this way may be interchangeable in proper cases, so that solutions other than embodiments of this application can be described. In addition, in embodiments of this application, words such as "S210" are merely identifiers for ease of description, and do not limit a sequence of performing steps.

Third, in embodiments of this application, a word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

Fourth, "save" in embodiments of this application may mean that saved in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, in embodiments of this application, a "protocol" may be a standard protocol in the communication field, for example, may include an NR protocol and a related protocol applied to a future communication system. This is not limited in this application.

Sixth, in embodiments of this application, "of (of)", "corresponding/relevant (corresponding/relevant)", "corresponding (corresponding)", and "associated (associated)" may sometimes be used interchangeably. It should be noted that expressed meanings are consistent when no difference between the terms is emphasized.

Seventh, in embodiments of this application, "in a case of", "when", and "if" may be used interchangeably sometimes. It should be noted that, when a difference between the terms is not emphasized, meanings to be expressed are consistent.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

The following describes technical solutions of this application with reference to accompanying drawings.

A communication method provided in this application may be applied to various communication systems, for example, internet of things (internet of things, IoT), narrow band internet of things (narrow band internet of things, NB-IoT), long term evolution (long term evolution, LTE), a 5th generation (5th generation, 5G) communication system, an LTE and 5G hybrid architecture, a 5G new radio (new radio, NR) system, and a next generation system or a new communication system emerging in future communication development. The communication system in this application may alternatively be a machine to machine (machine to machine, M2M) network or another network.

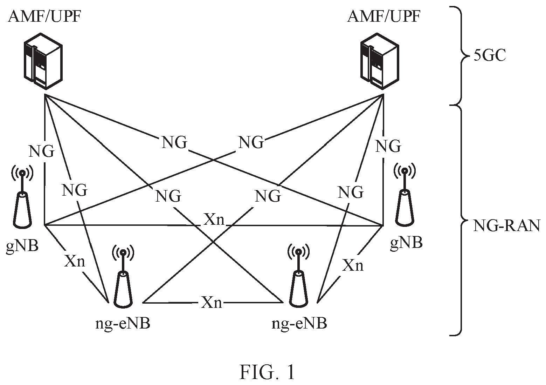

FIG. 1 is a diagram of a communication system to which an embodiment of this application is applied. In a 5G system, a 5G access point includes a base station node, namely, a next generation radio access network (next generation radio access network, NG-RAN). An NG-RAN node may be a 5G new generation NodeB (generation NodeB, gNB) or an LTE evolved NodeB (next generation eNodeB, ng-eNB). The gNB uses NR user plane and control plane protocol stacks, and the ng-eNB uses evolved universal terrestrial radio access (evolved universal terrestrial radio access, E-UTRA) user plane and control plane protocol stacks in addition to a service data adaptation protocol (service data adaptation protocol, SDAP) layer.

The gNB and the gNB, the ng-eNB and the ng-eNB, and the gNB and the ng-eNB are connected through Xn interfaces. The gNB and the ng-eNB are connected to a 5G core network (5G core, 5GC) device through an NG interface. For example, a control plane is connected to a core network device (for example, a mobility management module (access and mobility management function, AMF)) through an NG-C interface, and a user plane is connected to a core network device (for example, a user plane function (user plane function, UPF)) through an NG-U interface.

It should be understood that FIG. 1 is merely an example, and does not constitute any limitation on the protection scope of this application. The scenario shown in FIG. 1 may further include another device, for example, a terminal device and a server. For another example, the 5GC further includes another functional network element in addition to the AMF and the APF.

A terminal device (terminal device) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

By way of example but not limitation, in embodiments of this application, the wearable device may also be referred to as a wearable intelligent device, and is a general name of a wearable device developed by intelligently designing daily wear through a wearable technology, such as glasses, gloves, watches, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may be a terminal device in an IoT system. A main technical feature of the terminal device is that an object is connected to a network by using a communication technology, so as to implement an intelligent network for man-machine interconnection and thing-to-thing interconnection. In embodiments of this application, the IoT technology can implement massive connections, deep coverage, and terminal power saving by using, for example, a narrow band (narrow band, NB) technology.

For example, the terminal device may be a terminal device such as a VR terminal, an AR terminal, or an MR terminal in an XR scenario. For another example, the terminal device may be a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A type or the like of the terminal device is not limited in embodiments of this application. For ease of description, in this application, an example in which the UE represents the terminal device is used for description below.

A base station in embodiments of this application may be any device that has a wireless transceiver function and that is configured to communicate with the terminal device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home evolved NodeB (home evolved NodeB, HeNB, or home NodeB, HNB), a baseband unit (baseBand unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, or may be a gNB in a 5G system, for example, NR, a transmission point (TRP or TP), or an antenna panel or a group of antenna panels (including a plurality of antenna panels) of a base station in a 5G system, or may be a network node that forms a gNB or transmission point, for example, a baseband unit (BBU) or a distributed unit (distributed unit, DU), or may be a device that communicates with the terminal device and that is in a future communication system, for example, a gNB in a future communication system.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that an access network device may be a device including one or more of a CU node, a DU node, or an AAU node. In addition, the CU may be classified into a network device in an access network (radio access network, RAN), or the CU may be classified into a network device in a core network (core network, CN). This is not limited in this application.

In different systems, the CU (or a CU-CP and a CU-UP), the DU, or the RU may alternatively have different names, but a person skilled in the art may understand meanings thereof. For example, the radio access network may also be an open radio access network (open radio access network, O-RAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of the software module and the hardware module.

The core network device part in embodiments of this application may include but is not limited to the following NFs: a UPF, a network exposure function (network exposure function, NEF), a network function repository function (network function repository function, NRF), a policy control function (policy control function, PCF), a unified data management function (unified data management, UDM), a unified data repository function (unified data repository, UDR), a network data analytics function (network data analytics function, NWDAF), an authentication server function (authentication server function, AUSF), an AMF, a session management function (session management function, SMF), a network slice selection function (network slice selection function, NSSF), and the like. The AMF, the SMF, the UPF, the NEF, the AUSF, the NRF, the PCF, the NSSF, and the UDM may be understood as network elements configured to implement different functions in a core network, for example, may be combined into a network slice based on a requirement. The core network elements may be independent devices, or may be integrated into a same device to implement different functions. Specific forms of the foregoing network elements are not limited in this application.

It should be understood that, the foregoing names are defined only for ease of distinguishing between different functions, and should not constitute any limitation on this application. This application does not exclude a possibility that other names are used in the 5G network and another future network. For example, in the future communication network, some or all of the foregoing network elements may still use terms in 5G, or may use other names.

It should be understood that, in FIG. 1, communication between the access network device and the terminal device and communication between the access network device and the core network device are used as an example to briefly describe a communication scenario to which this application can be applied, and no limitation is imposed on another scenario to which this application can be applied. It should be further understood that FIG. 1 is merely a simplified diagram of an example for ease of understanding. The communication system may further include another network device or may further include another terminal device, which is not shown in FIG. 1.

For ease of understanding embodiments of this application, some basic concepts in this application are briefly described.
1. XR technology: The XR technology is a general term for a plurality of technologies such as AR, VR, or MR. It combines reality and virtuality through computers to create a virtual, immersive human-machine interaction environment. It uses technologies such as AR, VR, or MR to provide seamless transitions between virtual and real worlds. XR services are bandwidth-intensive and latency-sensitive.
2. Convergence of 5G and XR technologies: A 5G network can accelerate data rates, reduce latency, support more users, devices, and services, and improve network efficiency. Therefore, the 5G network can meet the requirements of high bandwidth and low delay of the XR services.
   Specifically, convergence of 5G and XR technologies is mainly implemented as follows: A 5G communication network serves as an intermediate node between a server and a client, and is responsible for XR data transmission between the server and the client.
3. Predicted network transmission capability: The predicted network transmission capability indicates a transmission assurance capability that can be provided by a network for data of a terminal device in a future period of time (for example, in a first time period), and includes but is not limited to a network transmission assurance capability for at least one of a rate, a packet loss rate, a delay, a total data amount, or the like of data of a terminal device (for example, a first terminal device) in the first time period.

The predicted network transmission capability in this application includes a predicted first network transmission capability and/or a predicted second network transmission capability. The first network transmission capability is a network transmission capability between an access network device and the first terminal device, and the second network transmission capability is a network transmission capability between the access network device and a core network device.

The first network transmission capability includes but is not limited to a transmission assurance capability of the access network device on at least one of a rate, a packet loss rate, a delay, a total data amount, or the like for the data of the first terminal device in the first time period.

The second network transmission capability includes but is not limited to a transmission assurance capability of the core network device on at least one of the rate, the packet loss rate, the delay, the total data amount, or the like for the data of the first terminal device in the first time period.

The first network transmission capability may be determined based on one or more of the following information:
a radio environment in which the first terminal device is located, channel quality of the first terminal device, a radio scheduling capability of the access network device for the data of the first terminal device, a software processing resource or a hardware processing resource of the access network device for the data of the first terminal device, or a quantity of terminal devices connected to the access network device. The first terminal device is one of the terminal devices connected to the access network device.

The second network transmission capability may be determined based on one or more of the following information:
a forwarding capability of the core network device for the data of the first terminal device, a software processing resource or a hardware processing resource of the core network device for the data of the first terminal device, or a quantity of terminal devices managed by the core network device. The first terminal device is one of the terminal devices managed by the core network device.

4. Predicted data feature: The predicted data feature indicates a data feature of the first terminal device in a future period of time, and includes but is not limited to a predicted first rate, a predicted first packet loss rate, a predicted first delay, or the like of the data of the first terminal device.

The predicted data feature may be determined based on a data feature of historical data of the first terminal device and a prediction algorithm. The prediction algorithm includes but is not limited to a prediction manner like artificial intelligence, a digital twin, or a neural network.

With reference to FIG. 1, the foregoing briefly describes a scenario to which the communication method provided in embodiments of this application can be applied, describes basic concepts that may be used in embodiments of this application, and describes convergence of 5G and XR technologies in the basic concepts. It should be understood that, in a scenario in which 5G and XR technologies are converged, if performance of a communication network deteriorates, a receive end (for example, a client) may perceive packet loss or a longer delay of a data packet, so that the receive end feeds back, to a transmit end (for example, a server), information indicating the packet loss or the longer delay of the data packet, and the transmit end performs congestion control based on the feedback information, for example, reduces a bit rate (for example, changes a definition from a high definition to a common definition, so that generated data is reduced).

However, a solution in which the transmit end performs congestion control is as follows: The transmit end triggers congestion control based on actual packet loss or delay statistics fed back by the receive end, to cause a frame freezing problem and a frame loss problem in the XR service. For example, the packet loss causes the frame loss in the XR service. For another example, a data packet delay causes the frame freezing in the XR service.

This application provides a communication method. A network capability is predicted in advance, and control is performed based on network capability information, to reduce the probability of packet loss or long delays and improve user experience.

The following describes the technical solutions provided in this application in detail with reference to the accompanying drawings. Embodiments of this application may be applied to a plurality of different scenarios, including but not limited to the scenario shown in FIG. 1. For example, embodiments of this application may be further applied to a 5G communication system, a next generation communication system, or a future communication system.

It should be understood that a specific structure of an execution body of the method provided in embodiments of this application is not particularly limited in the following embodiments, provided that a program that records code of the method provided in embodiments of this application can be run to perform communication according to the method provided in embodiments of this application. For example, the execution body of the method provided in embodiments of this application may be a receive end device or a transmit end device, or a functional module that is in the receive end device or the transmit end device and that can invoke the program and execute the program.

Without loss of generality, the following describes, by using interaction between a first communication apparatus and a second communication apparatus as an example, in detail the communication method provided in embodiments of this application. The first communication apparatus may be an access network device (or a central unit (central unit, CU) or a distributed unit (distributed unit, DU) in the access network device). Alternatively, the first communication apparatus may be a network device in an open radio access network (open radio access network, O-RAN) (or a CU (for example, referred to as an O-CU) or a DU (for example, referred to as an O-DU (open DU)) in the open radio access network). Alternatively, the first communication apparatus may be a core network device (for example, a user plane function (user plane function, UPF) network element). The second communication apparatus is an access network device, a core network device, a terminal device, or the like.

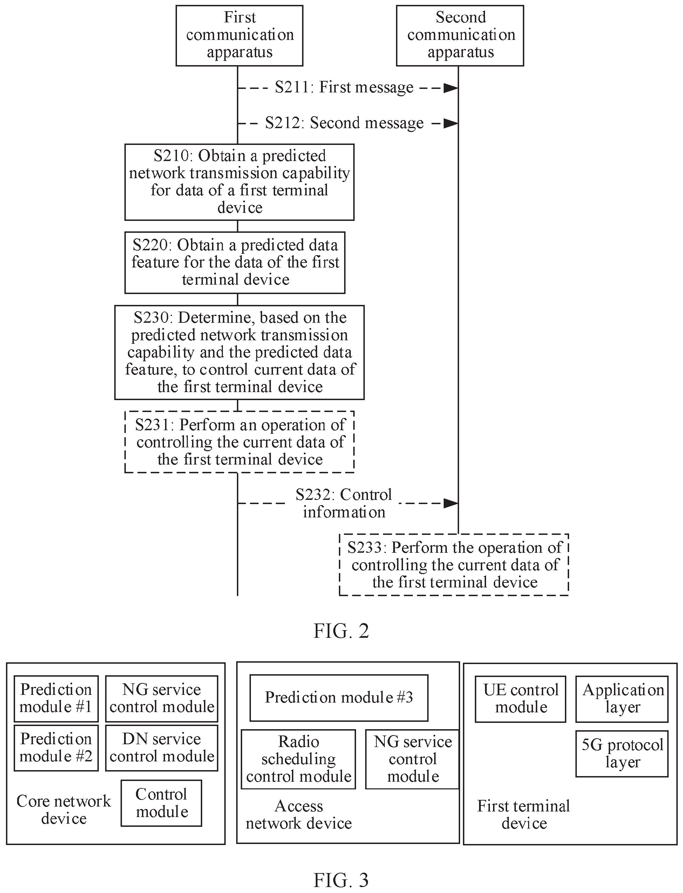

FIG. 2 is a schematic flowchart of a communication method according to this application. The method includes the following step.

S210: A first communication apparatus obtains a predicted network transmission capability for data of a first terminal device.

Specifically, the predicted network transmission capability is a transmission assurance capability that can be provided by a network for the data of the first terminal device in a future period of time (for example, a first time period) and that is predicted at a current moment #1. The current moment #1 is any moment at which network transmission capability prediction is performed. In this embodiment, the moment at which network transmission capability prediction is performed may be any one of predefined periodic moments, may be any one of one or more prediction moments indicated by a management device, or may be any moment (for example, a moment at which network transmission capability prediction is performed in real time). In this embodiment, a moment specifically indicated by the current moment #1 is not limited. In addition, the data of the first terminal device is generally data for the first terminal device, and includes but is not limited to future data, current data, historical data, or the like of the first terminal device.

Optionally, the predicted network transmission capability includes at least one of the following: a predicted network transmission assurance capability for a rate (or a throughput), a packet loss rate, or a delay of the data of the first terminal device. The delay of the data of the first terminal device may be a delay parameter that can represent delay information, for example, an average delay, a maximum delay, or a delay gradient of the data of the first terminal device.

For example, the predicted network transmission capability includes: a predicted first network transmission capability and/or a predicted second network transmission capability. The first network transmission capability is a network transmission capability between an access network device and the first terminal device. Specifically, the first network transmission capability includes a transmission capability of the access network device and/or a transmission capability of a terminal device. The second network transmission capability is a network transmission capability between the access network device and a core network device. Specifically, the second network transmission capability includes the transmission capability of the access network device and/or a transmission capability of the core network device. For related descriptions of the first network transmission capability and the second network transmission capability, refer to the descriptions of the first network transmission capability and the second network transmission capability in the foregoing basic concept descriptions. Details are not described herein again.

In this embodiment, that the first communication apparatus obtains the predicted network transmission capability for the data of the first terminal device includes but is not limited to the following possible manners.

In a possible implementation, if the predicted network transmission capability includes the predicted first network transmission capability and/or the predicted second network transmission capability, and the first communication apparatus is a core network device or an access network device, that the first communication apparatus obtains the predicted network transmission capability includes: determining the first network transmission capability and/or the second network transmission capability.

In this implementation, the first communication apparatus may determine the first network transmission capability and/or the second network transmission capability. For example, the first communication apparatus is a core network device or an access network device.

By way of example but not limitation, the first communication apparatus may determine the first network transmission capability based on one or more of the following information:
a radio environment in which the first terminal device is located, channel quality (for example, reference signal received power RSRP) of the first terminal device, a radio scheduling capability of the access network device for the data of the first terminal device, a software processing resource or a hardware processing resource of the access network device for the data of the first terminal device, or a quantity of terminal devices (for example, M terminal devices, where M is greater than or equal to 1) connected to the access network device. The first terminal device is one of the terminal devices connected to the access network device. The information needed for determining the first network transmission capability may be received by the first communication apparatus from another communication apparatus, or may be locally recorded by the first communication apparatus. A manner of obtaining the information needed for determining the first network transmission capability is not limited in this embodiment. For example, when a radio environment in which the first terminal device is located in a first time period (for example, a time period A) is worse than a radio environment at a current moment (for example, a moment a) (for example, due to mobility of the first terminal device, there are more obstructions between the first terminal device and the access network device in the first time period), the first network transmission capability is worse than a current network transmission capability. The time period A is later than the moment a.

For another example, when channel quality of the first terminal device in a first time period (for example, a time period A) is worse than channel quality at a current moment (for example, a moment a) (for example, due to mobility of the first terminal device, there are more obstruction between the first terminal device and the access network device in the first time period), the first network transmission capability is worse than a current network transmission capability. The time period A is later than the moment a.

For still another example, when the scheduling capability of the access network device for the data of the first terminal device in a first time period (for example, a time period A) is worse than a scheduling capability at a current moment (for example, a moment a), the first network transmission capability is worse than a current network transmission capability. The time period A is later than the moment a.

For still another example, when a software processing resource or a hardware processing resource of the access network device for the data of the first terminal device in a first time period (for example, a time period A) is less than a software processing resource or a hardware processing resource at a current moment (for example, a moment a) (for example, some software processing resources or hardware processing resources of the access network device need to be allocated to a terminal device other than the first terminal device in the first time period), the first network transmission capability is worse than a current network transmission capability. The time period A is later than the moment a.

For still another example, when a quantity of terminal devices connected to the access network device in a first time period (for example, a time period A) is greater than a quantity of connected terminal devices at a current moment (for example, a moment a), the first network transmission capability is worse than a current network transmission capability. The time period A is later than the moment a.

It should be understood that the foregoing is merely an example for describing a possible manner of determining the first network transmission capability in this application, and does not constitute any limitation on the protection scope of this application.

By way of example but not limitation, the first communication apparatus may determine the second network transmission capability based on one or more of the following information:
a forwarding capability of the core network device for the data of the first terminal device, a software processing resource or a hardware processing resource of the core network device for the data of the first terminal device, or a quantity of terminal devices (for example, M terminal devices, where M is greater than or equal to 1) managed by the core network device. The first terminal device is one of the terminal devices managed by the core network device. The information needed for determining the second network transmission capability may be received by the first communication apparatus from another communication apparatus, or may be locally recorded by the first communication apparatus. A manner of obtaining the information needed for determining the second network transmission capability is not limited in this embodiment.

For example, when a forwarding capability of the core network device for the data of the first terminal device in a first time period (for example, a time period A) is worse than a forwarding capability at a current moment (for example, a moment a) (for example, some radio frequency units of the core network device are in an offline state in the first time period), the second network transmission capability is worse than a current network transmission capability. The time period A is later than the moment a.

For another example, when a software processing resource or a hardware processing resource of the core network device for the data of the first terminal device in a first time period (for example, a time period A) is less than a software processing resource or a hardware processing resource at a current moment (for example, a moment a) (for example, some software processing resources or hardware processing resources of the core network device need to be allocated to a terminal device other than the first terminal device in the first time period), the second network transmission capability is worse than a current network transmission capability. The time period A is later than the moment a.

For still another example, when a quantity of terminal devices managed by the core network device in a first time period (for example, a time period A) is greater than a quantity of managed terminal devices at a current moment (for example, a moment a), the second network transmission capability is worse than a current network transmission capability. The time period A is later than the moment a.

It should be understood that the foregoing is merely an example for describing a possible manner of determining the second network transmission capability in this application, and does not constitute any limitation on the protection scope of this application.

In another possible implementation, if the predicted network transmission capability includes the predicted first network transmission capability and/or the predicted second network transmission capability, that the first communication apparatus obtains the predicted network transmission capability includes: receiving first prediction information and/or second prediction information, where the first prediction information indicates the first network transmission capability, and the second prediction information indicates the second network transmission capability.

In this implementation, the first communication apparatus may receive, from another communication apparatus (for example, a second communication apparatus), the first prediction information and/or the second prediction information used for indication. The first prediction information indicates the first network transmission capability, and the second prediction information indicates the second network transmission capability. The first communication apparatus does not need to determine the first network transmission capability and/or the second network transmission capability, to reduce complexity of the first communication apparatus. For example, the first communication apparatus is a core network device, and the second communication apparatus is an access network device. Alternatively, for another example, the first communication apparatus is an access network device, and the second communication apparatus is a core network device.

In still another possible implementation, if the predicted network transmission capability includes the predicted first network transmission capability and the predicted second network transmission capability, that the first communication apparatus obtains the predicted network transmission capability includes: determining the first network transmission capability, and receiving second prediction information, where the second prediction information indicates the second network transmission capability. For example, the first communication apparatus is an access network device, and the second communication apparatus is a core network device.

In still another possible implementation, if the predicted network transmission capability includes the predicted first network transmission capability and the predicted second network transmission capability, and the first communication apparatus is an access network device, that the first communication apparatus obtains the predicted network transmission capability includes: determining the second network transmission capability, and receiving first prediction information, where the first prediction information indicates the first network transmission capability. For example, the first communication apparatus is a core network device, and the second communication apparatus is an access network device.

In the foregoing several possible implementations, the possible manners in which the first communication apparatus obtains the predicted network transmission capability are described by using examples in this embodiment. Optionally, when the first communication apparatus receives the first prediction information from the second communication apparatus, the communication method may further include the following step.

S211: The first communication apparatus sends a first message to the second communication apparatus, and correspondingly, the second communication apparatus receives the first message from the first communication apparatus.

The first message indicates the second communication apparatus to report the first prediction information. Alternatively, the first message may be used to request or subscribe to the first prediction information.

Optionally, the first message may include first indication information, and the first indication information indicates a condition for reporting the first prediction information. For example, the first network transmission capability is a predicted transmission capability of the access network device for the data of the first terminal device, and the first indication information may indicate a threshold of the transmission capability of the access network device. When the transmission capability of the access network device is greater than or equal to the threshold (or less than or equal to a threshold), the second communication apparatus reports the first prediction information to the first communication apparatus. The threshold is provided in the first message, may be predefined, or may be determined through negotiation between the first communication apparatus and the second communication apparatus. This is not limited in this embodiment. For example, if the first network transmission capability is a predicted rate that can be provided by the access network device for the data of the first terminal device, the first indication information may indicate, when the predicted rate is greater than or equal to a threshold, the second communication apparatus to report the first prediction information to the first communication apparatus. For another example, if the first network transmission capability is a predicted delay that can be provided by the access network device for the data of the first terminal device, the first indication information may indicate, when the predicted delay is less than or equal to a threshold, the second communication apparatus to report the first prediction information to the first communication apparatus.

Optionally, when the first communication apparatus receives the second prediction information from the second communication apparatus, the communication method may further include the following step.

S212: The first communication apparatus sends a second message to the second communication apparatus, and correspondingly, the second communication apparatus receives the second message from the first communication apparatus.

The second message indicates the second communication apparatus to report the second prediction information. Alternatively, the second message may be used to request or subscribe to the second prediction information.

Optionally, the second message may include second indication information, and the second indication information indicates a condition for reporting the second prediction information. For example, the second network transmission capability is a predicted transmission capability of the core network device for the data of the first terminal device, and the second indication information may indicate a threshold of the transmission capability of the core network device. When the transmission capability of the core network device is greater than or equal to the threshold (or less than or equal to a threshold), the second communication apparatus reports the second prediction information to the first communication apparatus. The threshold is provided in the second message, may be predefined, or may be determined through negotiation between the first communication apparatus and the second communication apparatus. This is not limited in this embodiment. For example, if the second network transmission capability is a predicted rate that can be provided by the core network device for the data of the first terminal device, the second indication information may indicate, when the predicted rate is greater than or equal to a threshold, the second communication apparatus to report the second prediction information to the first communication apparatus. For another example, if the first network transmission capability is a predicted delay that can be provided by the core network device for the data of the first terminal device, the second indication information may indicate, when the predicted delay is less than or equal to a threshold, the second communication apparatus to report the second prediction information to the first communication apparatus.

In addition, to determine whether the predicted network transmission capability can meet a data feature of the first terminal device in a future period of time (for example, a second time period) later than a current moment #2, in this embodiment, the first communication apparatus may further obtain a predicted data feature for the data of the first terminal device in the second time period later than the current moment #2. The method procedure shown in FIG. 2 further includes the following steps.

S220: The first communication apparatus obtains the predicted data feature for the data of the first terminal device.

Specifically, the predicted data feature indicates a data feature of the first terminal device in a future period of time (for example, the second time period). The predicted data feature is a data feature that is of the first terminal device in a future period of time (for example, the second time period) and that is predicted at a current moment #2. The current moment #2 is any moment at which the data feature of the first terminal device is predicted. In this embodiment, the moment at which the data feature of the first terminal device is predicted may be any one of predefined periodic moments, may be any one of one or more prediction moments indicated by the management device, or may be any moment (for example, a moment at which the data feature of the first terminal device is predicted in real time). In this embodiment, a moment specifically indicated by the current moment #2 is not limited.

It should be noted that the foregoing current moment #1 and the current moment #2 in this embodiment may be a same moment or different moments. It may be understood as that the moment at which network transmission capability prediction is performed and the moment at which the data feature of the first terminal device is predicted may be different moments, or may be a same moment.

In addition, the foregoing first time period and the second time period in this embodiment may be a same time period or different time periods. It may be understood as that a time period corresponding to the predicted network transmission capability may be different from a time period corresponding to the predicted data feature of the first terminal device, for example, the second time period includes the first time period, or the first time period includes the second time period.

Optionally, the predicted data feature includes a predicted first rate, a predicted first packet loss rate, or a predicted first delay related to the data of the first terminal device. The first rate includes but is not limited to a generation rate (or an original rate) or a transmission rate.

In this embodiment, that the first communication apparatus obtains the predicted data feature for the data of the first terminal device includes but is not limited to the following possible manners.

In a possible implementation, the first communication apparatus determines the predicted data feature.

In this implementation, the first communication apparatus may determine the predicted data feature.

By way of example but not limitation, the first communication apparatus may determine the predicted data feature based on a data feature of historical data of the first terminal device and a prediction algorithm (for example, an artificial intelligence algorithm or a machine learning algorithm). Alternatively, the first communication apparatus may determine the predicted data feature based on a data feature of historical data of the first terminal device and a source knowledge graph.

In a possible implementation, the first communication apparatus receives third prediction information, where the third prediction information indicates the predicted data feature.

In this implementation, the first communication apparatus may receive the third prediction information from another communication apparatus (for example, the second communication apparatus). The third prediction information indicates the predicted data feature, and the first communication apparatus does not need to determine the predicted data feature, to reduce complexity of the first communication apparatus.

Optionally, when the first communication apparatus receives the third prediction information from the second communication apparatus, the communication method may further include the following step.

S221: The first communication apparatus sends a third message to the second communication apparatus, and correspondingly, the second communication apparatus receives the third message from the first communication apparatus.

The third message indicates the second communication apparatus to report the third prediction information. Alternatively, the third message may be used to request or subscribe to the third prediction information.

Optionally, the third message may include third indication information, and the third indication information indicates a condition for reporting the third prediction information. For example, the predicted data feature is a predicted rate of the data of the first terminal device, and the third indication information may indicate a predicted rate threshold. When the predicted rate is greater than or equal to the rate threshold, the second communication apparatus reports the third prediction information to the first communication apparatus. The threshold is provided in the third message, may be predefined, or may be determined through negotiation between the first communication apparatus and the second communication apparatus. This is not limited in this embodiment.

Optionally, step S210 and step S220 may be a same step, that is, the first communication apparatus may obtain the predicted network transmission capability and the predicted data feature in one step.

Further, after obtaining the predicted network transmission capability and the predicted data feature, the first communication apparatus may determine, based on the predicted network transmission capability and the predicted data feature, whether current data of the first terminal device needs to be controlled. The method procedure shown in FIG. 2 further includes the following step.

S230: The first communication apparatus determines, based on the predicted network transmission capability and the predicted data feature, to control the current data of the first terminal device.

The current data of the first terminal device may include one or more pieces of data. For example, the current data of the first terminal device is one or more pieces of currently known data of the first terminal device.

It should be understood that, in this embodiment, the first communication apparatus may determine, based on the predicted network transmission capability and the predicted data feature, whether the current data of the first terminal device needs to be controlled (for example, congestion control or non-congestion control). The predicted network transmission capability includes the first network transmission capability and/or the second network transmission capability. In this embodiment, the first communication apparatus may determine, based on the first network transmission capability and/or the second network transmission capability and the predicted data feature, whether the current data of the first terminal device needs to be controlled (for example, congestion control or non-congestion control).

Specifically, if the predicted network transmission capability for the first terminal device cannot ensure a requirement of the predicted data feature for the first terminal device, the first communication apparatus may perform congestion control. If the predicted network transmission capability for the first terminal device can ensure the requirement of the predicted data feature for the first terminal device, the first communication apparatus may perform non-congestion control, for example, cancel the previous congestion control operation, or for example, determine not to actively delay the current data of the first terminal device, not to actively discard the current data of the first terminal device, or not to actively reduce a rate of the current data of the first terminal device.

Optionally, controlling the current data of the first terminal device may be: When a current network is in a non-congested state, if network congestion may occur on data of the first terminal device in the future, congestion control may be performed on the current data of the first terminal device. For example, if network congestion may occur on the data of the first terminal device in the first time period, congestion control may be actively performed in advance. For example, congestion control such as active delaying, active packet discarding, and active rate reduction is performed in advance.

When the current network is in a congested state, if network congestion does not occur on the data of the first terminal device in the future, non-congestion control may be performed on the current data of the first terminal device, for example, the previous congestion control operation is canceled, or for another example, it is determined that the current data of the first terminal device is not actively delayed, the current data of the first terminal device is not actively discarded, or a rate of the current data of the first terminal device is not actively reduced. For example, if future network congestion does not occur on the data of the first terminal device in the first time period (a network capability in the first time period is far greater than a requirement of the data feature of the first terminal device), non-congestion control may be performed, for example, a previous congestion control operation on the current data of the first terminal device is canceled, or for another example, the current data of the first terminal device is not actively delayed, the current data of the first terminal device is not actively discarded, or a rate of the current data of the first terminal device is not actively reduced.

In a possible implementation, when it is determined, based on the predicted network transmission capability and the predicted data feature, that the predicted network transmission capability cannot ensure a requirement of the predicted data feature, it is determined that congestion control is to be performed on the current data of the first terminal device.

For example, if the predicted network transmission capability includes the predicted first network transmission capability, the first network transmission capability is a predicted network transmission assurance capability for a rate of the data of the first terminal device, and the predicted data feature is a predicted first rate related to the data of the first terminal device, when the predicted network transmission assurance capability for the rate of the data of the first terminal device cannot ensure the first rate, it is determined that congestion control is to be performed on the current data of the first terminal device.

By way of example but not limitation, in one or more of the following scenarios, the first communication apparatus determines to perform congestion control on the current data of the first terminal device.

If a rate of the data of the first terminal device in the second time period does not change compared with a rate of the data of the first terminal device at the current moment #2, but a network transmission capability in the first time period is worse than a network transmission capability at the current moment #1, the first communication apparatus determines to perform congestion control on the current data of the first terminal device.

Alternatively, if a rate of the data of the first terminal device in the second time period is greater than a rate of the data of the first terminal device at the current moment #2, but a network transmission capability in the first time period does not change compared with a network transmission capability at the current moment #1 or is worse than the network transmission capability at the current moment #1, the first communication apparatus determines to perform congestion control on the current data of the first terminal device.

Alternatively, if a rate of the data of the first terminal device in the second time period changes compared with a rate of the data of the first terminal device at the current moment #2, and a network transmission capability in the first time period also changes compared with a network transmission capability at the current moment #1, but the network transmission capability in the first time period cannot ensure the rate of the data of the first terminal device in the second time period, the first communication apparatus determines to perform congestion control on the current data of the first terminal device.

In another possible implementation, when it is determined, based on the predicted network transmission capability and the predicted data feature, that the predicted network transmission capability can ensure a requirement of the predicted data feature, it is determined that non-congestion control is to be performed. For example, it is determined that the current data of the first terminal device does not need to be controlled (for example, delivery of the current data of the first terminal device is not actively delayed, the current data of the first terminal device is not actively discarded, or a rate of the current data of the first terminal device is not actively reduced). For another example, it is determined that congestion control on the current data of the first terminal device is to be canceled.

For example, in this embodiment, it is mainly considered that the first communication apparatus determines to control the current data of the first terminal device.

After the first communication apparatus determines, based on the predicted network transmission capability and the predicted data feature, that the current data of the first terminal device needs to be controlled, in this embodiment, controlling the current data of the first terminal device includes but is not limited to the following possible implementations.

In a possible implementation, the first communication apparatus performs an operation of controlling (including congestion control or non-congestion control) the current data of the first terminal device.

In this implementation, the first communication apparatus controls (including congestion control or non-congestion control) the current data of the first terminal device. The method procedure shown in FIG. 2 further includes the following step.

S231: The first communication apparatus performs the operation of controlling the current data of the first terminal device.

For example, the first communication apparatus performs a congestion control operation or a non-congestion control operation on the current data of the first terminal device.

For example, the first communication apparatus performs the congestion control operation on the current data of the first terminal device, for example, the first communication apparatus performs the congestion control operation like actively delaying delivery of the current data of the first terminal device, actively discarding the current data of the first terminal device, or actively reducing a rate of the current data of the first terminal device.

For another example, the first communication apparatus performs the non-congestion control operation on the current data of the first terminal device, for example, the first communication apparatus performs the non-congestion control operation like not actively delaying delivery of the current data of the first terminal device, not actively discarding the current data of the first terminal device, or not actively reducing a rate of the current data of the first terminal device. For another example, the first communication apparatus performs the non-congestion control operation, that is, cancels the previous congestion control, on the current data of the first terminal device.

For example, the first communication apparatus performs delay-based congestion control on the current data of the first terminal device, for example, actively delays delivering the current data of the first terminal device, so that a delay or a delay gradient of the current data of the first terminal device increases. Alternatively, the first communication apparatus performs rate-based congestion control on the current data of the first terminal device, for example, actively reduces a transmission rate of the current data of the first terminal device, so that the transmission rate of the current data of the first terminal device is reduced. Alternatively, the first communication apparatus performs packet loss-based congestion control on the current data of the first terminal device, for example, actively discards the current data of the first terminal device or feedback information for the current data of the first terminal device, or actively replies with a negative acknowledgment (negative acknowledgement, NACK) of the current data of the first terminal device, so that a quantity of lost packets of the data of the first terminal device increases.

In another possible implementation, after the first communication apparatus determines to control the current data of the first terminal device, the second communication apparatus performs an operation of controlling the current data of the first terminal device. The method procedure shown in FIG. 2 further includes the following steps.

S232: The first communication apparatus sends control information to the second communication apparatus, and correspondingly, the second communication apparatus receives the control information from the first communication apparatus.

Specifically, the control information indicates to perform congestion control or non-congestion control on the current data of the first terminal device. The non-congestion control may be understood as canceling a congestion control operation.

Optionally, for the congestion control, the control information includes at least one of the following information: rate information, delay amount information, or packet loss amount information. The rate information indicates recommended rate information, the delay amount information indicates active delay amount information (for example, an extra delay of 10 ms), and the packet loss amount information indicates active packet loss amount information (for example, 100 pieces of data are actively discarded).

Optionally, for the non-congestion control, the control information indicates to cancel the congestion control operation, or the control information indicates to perform a non-congestion control operation like not actively delaying delivery, not actively discarding a packet, or not actively reducing a rate.

S233: The second communication apparatus performs the operation of controlling the current data of the first terminal device.

For example, the second communication apparatus performs a congestion control operation or a non-congestion control operation on the current data of the first terminal device.

Specifically, for congestion control, the second communication apparatus performs, in response to the control information, the congestion control operation on the current data of the first terminal device, for example, an operation of actively delaying delivery of the current data of the first terminal device or actively discarding the current data of the first terminal device.

For non-congestion control, the second communication apparatus cancels the congestion control operation in response to the control information, for example, does not actively delay delivery or does not actively discard a packet. The following mainly uses congestion control as an example for description, and non-congestion control is not described again.

Optionally, if the control information includes rate control information, the control information indicates to control a rate of the current data of the first terminal device. In a possible implementation, the rate control information is the rate information. The second communication apparatus actively reduces the rate of the current data of the first terminal device, so that the rate of the current data of the first terminal device is less than or equal to a rate indicated by the rate information; and/or
if the control information includes delay control information, the control information indicates to control a delay of the current data of the first terminal device. In a possible implementation, the control information is the delay amount information. The second communication apparatus actively delays delivering the current data of the first terminal device, so that a delay gradient of the data of the first terminal device or a delay (an end-to-end delay) of the current data of the first terminal device additionally includes a delay indicated by the delay amount information, where the delay gradient may be understood as a difference between delays of different data (for example, a delay of data #1 is D1, a delay of data #2 is D2, and a delay gradient is D2-D1); and/or
if the control information includes packet loss control information, the control information indicates to control packet loss of the current data of the first terminal device. In a possible implementation, the control information is the packet loss amount information. The second communication apparatus actively discards the current data of the first terminal device or feedback information for the current data, so that a packet loss amount of the data of the first terminal device additionally includes a packet loss amount indicated by the packet loss amount information (for example, if a previous packet loss amount of the data of the first terminal device is P1, and the packet loss amount indicated by the packet loss amount information is P2, an accumulative packet loss amount of the data of the first terminal device is P1+P2).

Controlling a rate of the current data of the first terminal device to be less than or equal to a rate indicated by the rate information further includes: controlling the rate of the current data of the first terminal device to be less than or equal to the rate indicated by the rate information, where the rate of the current data of the first terminal device is greater than or equal to a minimum guaranteed rate.

For example, discarding the current data of the first terminal device may be discarding a small amount of data or discarding unimportant data, to reduce a bit rate at an application layer without affecting data transmission.

For ease of understanding, with reference to a specific example, how the first communication apparatus or the second communication apparatus performs the congestion control operation on the current data of the first terminal device is described.

Example 1: The first communication apparatus or the second communication apparatus receives current data at a moment A1, and completes processing of the current data at a moment A2. If the current data of the first terminal device is not controlled, the first communication apparatus or the second communication apparatus should deliver the data at a moment A3. For example, the first communication apparatus or the second communication apparatus is a core network device, and the core network device should deliver the data to another protocol layer, a terminal device, or an access network device at the moment A3. For another example, the first communication apparatus or the second communication apparatus is an access network device, and the access network device should deliver the data to another protocol layer (an upper layer of the access network device), a terminal device, or a core network device at the moment A3. For still another example, the second communication apparatus is a terminal device, and the terminal device should deliver the data to another protocol layer (an upper layer of the terminal device), an access network device, or a core network device at the moment A3. The moments A1, A2, and A3 may be the same or may be different.

In this embodiment, if the first communication apparatus or the second communication apparatus actively delays delivering the current data of the first terminal device, the first communication apparatus or the second communication apparatus delivers the data at a moment A3+K. For example, the first communication apparatus or the second communication apparatus is a core network device, and the core network device delivers the data to another protocol layer, a terminal device, or an access network device at the moment A3+K. For another example, the first communication apparatus or the second communication apparatus is an access network device, and the access network device delivers the data to another protocol layer (an upper layer of the access network device), a terminal device, or a core network device at the moment A3+K. For still another example, the second communication apparatus is a terminal device, and the terminal device delivers the data to another protocol layer (the data is delivered from a PDCP layer of the terminal device to a protocol layer above the PDCP layer of the terminal device), an access network device, or a core network device at the moment A3+K, where K is an active delay amount, and K is greater than 0.

Example 2: The first communication apparatus or the second communication apparatus receives N pieces of data. If the current data of the first terminal device is not controlled, the first communication apparatus or the second communication apparatus should deliver the N pieces of data. For example, the first communication apparatus or the second communication apparatus is a core network device, and the core network device should deliver the N pieces of data to another protocol layer, a terminal device, or an access network device. For another example, the first communication apparatus or the second communication apparatus is an access network device, and the access network device should deliver the N pieces of data to another protocol layer, a terminal device, or a core network device. For still another example, the second communication apparatus is a terminal device, and the terminal device should deliver the N pieces of data to another protocol layer (the data is delivered from a PDCP layer of the terminal device to a protocol layer above the PDCP layer of the terminal device), an access network device, or a core network device.

In this embodiment, if the first communication apparatus or the second communication apparatus actively discards the current data of the first terminal device, the first communication apparatus or the second communication apparatus discards M pieces of data in the N pieces of data or feedback information for the M pieces of data in the N pieces of data. For example, the first communication apparatus or the second communication apparatus is a core network device, and the core network device delivers the M pieces of data in the N pieces of data or the feedback information for the M pieces of data in the N pieces of data to another protocol layer, a terminal device, or an access network device. For another example, the first communication apparatus or the second communication apparatus is an access network device, and the access network device delivers the M pieces of data in the N pieces of data or the feedback information for the M pieces of data in the N pieces of data to another protocol layer, a terminal device, or a core network device. For still another example, the second communication apparatus is a terminal device, and the terminal device delivers the M pieces of data in the N pieces of data or the feedback information for the M pieces of data in the N pieces of data to another protocol layer (the data is delivered from a PDCP layer of the terminal device to a protocol layer above the PDCP layer of the terminal device), an access network device, or a core network device. N is greater than or equal to M.

Example 3: The first communication apparatus or the second communication apparatus receives N pieces of data. If the current data of the first terminal device is not controlled, the first communication apparatus or the second communication apparatus should feed back ACKs of the N pieces of data. For example, the first communication apparatus or the second communication apparatus is a core network device, and the core network device should feed back the ACKs of the N pieces of data to another protocol layer, a terminal device, or an access network device. For another example, the first communication apparatus or the second communication apparatus is an access network device, and the access network device should feed back the ACKs of the N pieces of data to another protocol layer, a terminal device, or a core network device. For still another example, the second communication apparatus is a terminal device, and the terminal device should feed back the ACKs of the N pieces of data to another protocol layer (the data is delivered from a PDCP layer of the terminal device to a protocol layer above the PDCP layer of the terminal device), an access network device, or a core network device.

In this embodiment, the first communication apparatus or the second communication apparatus feeds back a NACK of the current data of the first terminal device. In this case, the first communication apparatus or the second communication apparatus feeds back NACKs of M1 pieces of data in the N pieces of data. It may be understood as that even if the data is received, the NACK is fed back, indicating that the data is not received, to reduce a bit rate at which a transmit end sends the data. For example, the first communication apparatus or the second communication apparatus is a core network device, and the core network device feeds back the NACKs of the M1 pieces of data to another protocol layer, a terminal device, or an access network device. For another example, the first communication apparatus or the second communication apparatus is an access network device, and the access network device feeds back the NACKs of the M1 pieces of data to another protocol layer, a terminal device, or a core network device. For still another example, the second communication apparatus is a terminal device, and the terminal device should feed back the NACKs of the M1 pieces of data to another protocol layer (the data is delivered from a PDCP layer of the terminal device to a protocol layer above the PDCP layer of the terminal device), an access network device, or a core network device. N is greater than or equal to M1.

In the communication method shown in FIG. 2, the first communication apparatus may obtain the predicted network transmission capability and the predicted data feature. In addition, the first communication apparatus may determine, based on the obtained predicted network transmission capability and the obtained predicted data feature, whether the current data of the first terminal device needs to be controlled. Therefore, the first communication apparatus may determine, based on predicted future information (for example, a network transmission capability and a data feature in a future period of time) for the data of the first terminal device, whether transmission of the current data of the first terminal device needs to be actively adjusted in advance, thereby reducing the probability of packet loss or long delays due to future network performance deterioration.

For ease of understanding the communication method shown in FIG. 2, the following provides descriptions with reference to several specific examples.

Implementation 1: The first communication apparatus shown in FIG. 2 is a core network device, and the predicted network transmission capability includes a predicted first network transmission capability and a predicted second network transmission capability. A device for determining the first network transmission capability is an access network device, and a device for determining the second network transmission capability and the predicted data feature is a core network device. In addition, a device that performs the operation of controlling the current data of the first terminal device includes but is not limited to the core network device, the access network device, or the first terminal device.

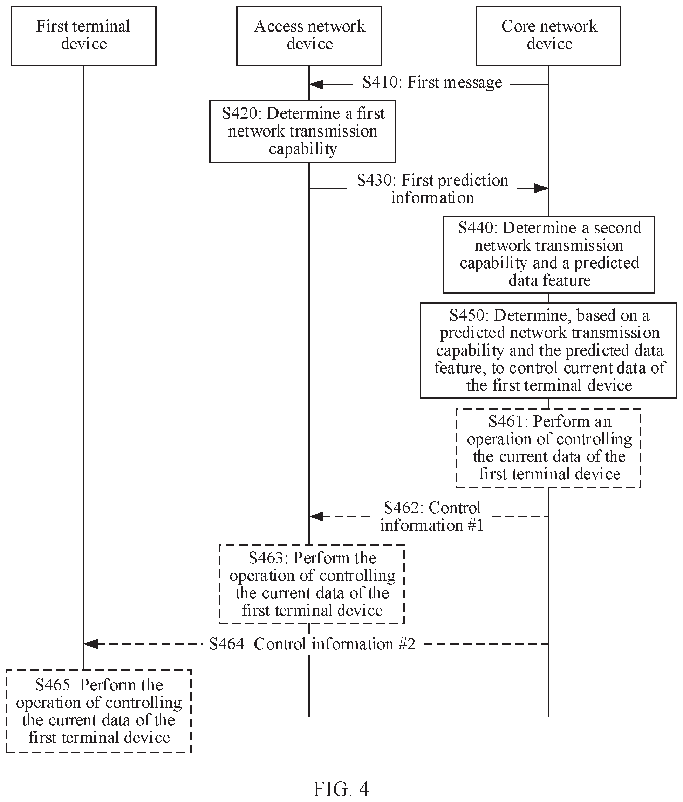

With reference to FIG. 3 and FIG. 4, the following describes in detail how to reduce the probability of packet loss or long delays in a case shown in Implementation 1.

FIG. 3 is a diagram of a network framework including a core network device, an access network device, and a first terminal device in a case shown in Implementation 1.

Specifically, in the case shown in Implementation 1, the core network device determines, based on the predicted network transmission capability and the predicted data feature, whether to control the current data of the first terminal device. Therefore, the core network device includes a control module (for example, a control module included in the core network device in FIG. 3) configured to determine whether to control the current data of the first terminal device. In addition, the core network device determines the second network transmission capability and the predicted data feature. Therefore, the core network device includes a prediction module #1 (for example, a prediction module #1 included in the core network device in FIG. 3) configured to determine the second network transmission capability, and a prediction module #2 (for example, a prediction module #2 included in the core network device in FIG. 3) configured to determine the predicted data feature. The prediction module #2 may be understood as a twin entity used for prediction. In addition, in the case shown in Implementation 1, the core network device may be further configured to perform the operation of controlling the current data of the first terminal device. Therefore, the core network device may further include a next generation radio network (next generation radio network, NG radio network) service control module and a data network (data network, DN) service control module (for example, an NG service control module and a DN service control module that are included in the core network device in FIG. 3) that are configured to perform the operation of controlling the current data of the first terminal device. For example, the NG service control module is configured to control a forwarding rate of the current data of the first terminal device in a core network. For another example, the DN service control module is configured to control a forwarding rate of the current data of the first terminal device outside a core network.

In the case shown in Implementation 1, the access network device determines the first network transmission capability. Therefore, the access network device includes a prediction module #3 (for example, a prediction module #3 included in the access network device in FIG. 3) configured to determine the first network transmission capability. In addition, in the case shown in Implementation 1, the access network device may be further configured to perform the operation of controlling the current data of the first terminal device. Therefore, the access network device may further include a radio scheduling control module and an NG service control module (for example, a radio scheduling control module and an NG service control module that are included in the access network device in FIG. 3) that are configured to control the current data of the first terminal device. For example, the radio scheduling control module is configured to control a scheduling policy for the current data of the first terminal device.

In the case shown in Implementation 1, the first terminal device may be configured to perform the operation of controlling the current data of the first terminal device. Therefore, the terminal device may further include a UE control module (for example, a UE control module included in the terminal device in FIG. 3) configured to control the current data of the first terminal device. In addition, the terminal device further includes an application layer and a protocol layer (for example, an application layer and a 5G protocol layer that are included in the terminal device in FIG. 3). The protocol layer may be a protocol layer (for example, a future communication protocol layer) specified in a protocol other than a 5G communication protocol. Data decoding is performed at the application layer performs. For example, the UE control module is configured to control to actively deliver the current data of the first terminal device. The data is delivered from the 5G protocol layer to the application layer. To be specific, after the data undergoes processing at each protocol layer, the data is delivered from the protocol layer to a next protocol layer for processing, and finally the processed data is delivered to the application layer.

FIG. 4 is a schematic flowchart of another communication method according to this application. For the case shown in Implementation 1, the method includes the following step.

S410: A core network device sends a first message to an access network device, and correspondingly, the access network device receives the first message from the core network device.

For step S410, refer to the descriptions of step S211 in FIG. 2. Details are not described herein again.

Further, after the access network device receives the first message, the access network device determines a first network transmission capability, and the method procedure shown in FIG. 4 further includes the following steps.

S420: The access network device determines the first network transmission capability.

Specifically, for a manner of determining the first network transmission capability by the access network device, refer to the foregoing descriptions of determining the first network transmission capability by the first communication apparatus shown in FIG. 2. Details are not described herein again.

S430: The access network device sends first prediction information to the core network device, and correspondingly, the core network device receives the first prediction information from the access network device.

S440: The core network device determines a second network transmission capability and a predicted data feature.

Specifically, for a manner of determining the second network transmission capability by the core network device, refer to the foregoing descriptions of determining the second network transmission capability by the first communication apparatus shown in FIG. 2. Details are not described herein again. In addition, for a manner of determining the predicted data feature by the core network device, refer to the foregoing descriptions of determining the predicted data feature by the first communication apparatus shown in FIG. 2. Details are not described herein again.

S450: The core network device determines, based on a predicted network transmission capability and the predicted data feature, to control current data of a first terminal device.

For descriptions of step S450, refer to step S230 in FIG. 2. Details are not described herein again.

When the core network device determines to control the current data of the first terminal device, the following possible manners may be included.

Manner 1: The core network device performs an operation of controlling the current data of the first terminal device, and the method procedure shown in FIG. 4 further includes the following step.

S461: The core network device performs the operation of controlling the current data of the first terminal device.

For descriptions of step S461, refer to step S231 in FIG. 2. Details are not described herein again.

Manner 2: The access network device performs an operation of controlling the current data of the first terminal device, and the method procedure shown in FIG. 4 further includes the following steps.

S462: The core network device sends control information #1 to the access network device, and correspondingly, the access network device receives the control information #1 from the core network device.

For step S462, refer to the descriptions of step S232 in FIG. 2. The control information #1 is equivalent to the foregoing control information in step S232, and the access network device is equivalent to the foregoing second communication apparatus. Details are not described herein again.

S463: The access network device performs the operation of controlling the current data of the first terminal device.

For descriptions of step S463, refer to step S233 in FIG. 2. Details are not described herein again.

Manner 3: The first terminal device performs an operation of controlling the current data of the first terminal device, and the method procedure shown in FIG. 4 further includes the following steps.

S464: The core network device sends control information #2 to the first terminal device, and correspondingly, the terminal device receives the control information #2 from the core network device.

For step S464, refer to the descriptions of step S232 in FIG. 2. The control information #2 is equivalent to the foregoing control information in step S232, and the first terminal device is equivalent to the foregoing second communication apparatus. Details are not described herein again.

S465: The first terminal device performs the operation of controlling the current data of the first terminal device.

For descriptions of step S465, refer to step S233 in FIG. 2. Details are not described herein again.

Implementation 2: The first communication apparatus shown in FIG. 2 is a core network device, and the predicted network transmission capability includes a predicted first network transmission capability and a predicted second network transmission capability. A device for determining the first network transmission capability and the predicted data feature is an access network device, and a device for determining the second network transmission capability is a core network device. In addition, a device that performs the operation of controlling the current data of the first terminal device includes but is not limited to the core network device, the access network device, or the first terminal device.

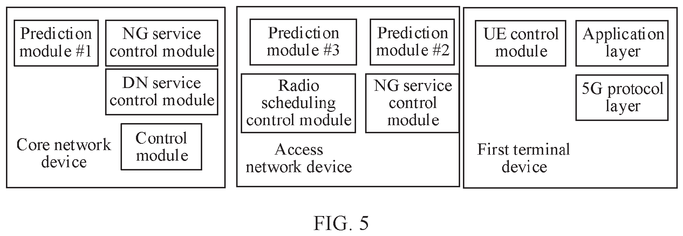

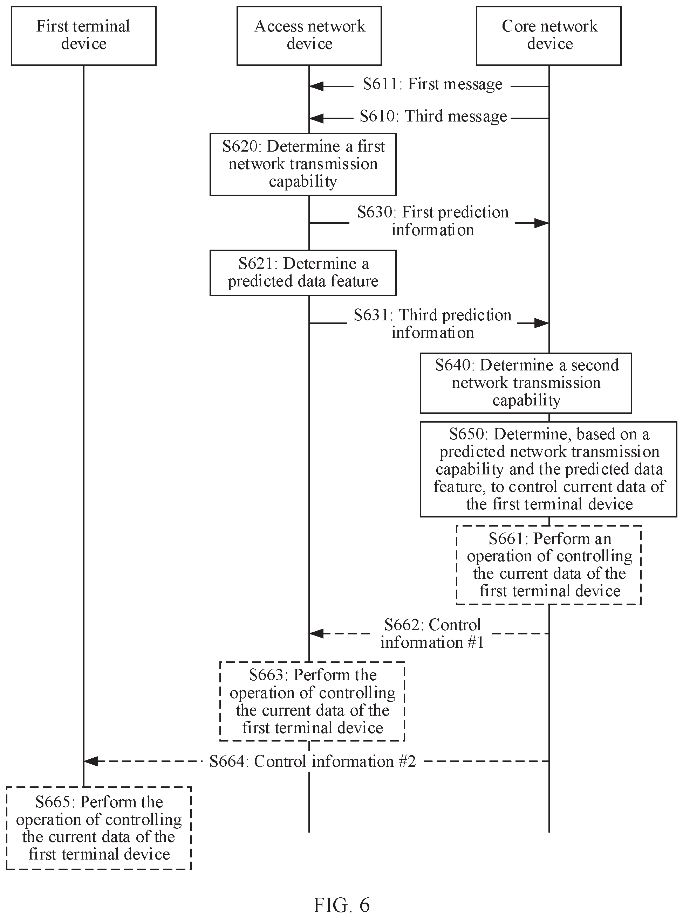

With reference to FIG. 5 and FIG. 6, the following describes in detail how to reduce the probability of packet loss or long delays in a case shown in Implementation 2.

FIG. 5 is a diagram of a network framework including a core network device, an access network device, and a first terminal device in a case shown in Implementation 2.

Specifically, in the case shown in Implementation 2, the core network device determines, based on the predicted network transmission capability and the predicted data feature, whether to control the current data of the first terminal device. Therefore, the core network device includes a control module (for example, a control module included in the core network device in FIG. 5) configured to determine whether to control the current data of the first terminal device. In addition, the core network device determines the second network transmission capability. Therefore, the core network device includes a prediction module #1 (for example, a prediction module #1 included in the core network device in FIG. 5) configured to determine the second network transmission capability. In addition, in the case shown in Implementation 2, the core network device may be further configured to perform the operation of controlling the current data of the first terminal device. Therefore, the core network device may further include an NG service control module and a DN service control module (for example, an NG service control module and a DN service control module that are included in the core network device in FIG. 5) that are configured to perform the operation of controlling the current data of the first terminal device.

In the case shown in Implementation 2, the access network device determines the first network transmission capability and the predicted data feature. Therefore, the access network device includes a prediction module #3 (for example, a prediction module #3 included in the access network device in FIG. 5) configured to determine the first network transmission capability, and a prediction module #2 (for example, a prediction module #2 included in the access network device in FIG. 5) configured to determine the predicted data feature. The prediction module #2 may be understood as a twin entity used for prediction. In addition, in the case shown in Implementation 2, the access network device may be further configured to perform the operation of controlling the current data of the first terminal device. Therefore, the access network device may further include a radio scheduling control module and an NG service control module (for example, a radio scheduling control module and an NG service control module that are included in the access network device in FIG. 3) that are configured to control the current data of the first terminal device.

In the case shown in Implementation 2, the first terminal device may be configured to perform the operation of controlling the current data of the first terminal device. Therefore, the terminal device may further include a UE control module (for example, a UE control module included in the terminal device in FIG. 5) configured to control the current data of the first terminal device. In addition, the terminal device further includes an application layer and a protocol layer (for example, an application layer and a 5G protocol layer that are included in the terminal device in FIG. 5).

FIG. 6 is a schematic flowchart of another communication method according to this application. For the case shown in Implementation 2, the method includes the following steps.

S611: A core network device sends a first message to an access network device, and correspondingly, the access network device receives the first message from the core network device.

For step S611, refer to the descriptions of step S211 in FIG. 2. Details are not described herein again.

S610: The core network device sends a third message to the access network device, and correspondingly, the access network device receives the third message from the core network device.

For step S610, refer to the descriptions of step S221 in FIG. 2. Details are not described herein again.

Further, after the access network device receives the first message and the third message, the access network device determines a first network transmission capability and a predicted data feature, and the method procedure shown in FIG. 6 further includes the following steps.

S620: The access network device determines the first network transmission capability.

Specifically, for a manner of determining the first network transmission capability by the access network device, refer to the foregoing descriptions of determining the first network transmission capability by the first communication apparatus shown in FIG. 2. Details are not described herein again.

S621: The access network device determines the predicted data feature.

Specifically, for a manner of determining the predicted data feature by the access network device, refer to the foregoing descriptions of determining the predicted data feature by the first communication apparatus shown in FIG. 2. Details are not described herein again.

S630: The access network device sends first prediction information to the core network device, and correspondingly, the core network device receives the first prediction information from the access network device.

S631: The access network device sends third prediction information to the core network device, and correspondingly, the core network device receives the third prediction information from the access network device.

S640: The core network device determines a second network transmission capability.

Specifically, for a manner of determining the second network transmission capability by the core network device, refer to the foregoing descriptions of determining the second network transmission capability by the first communication apparatus shown in FIG. 2. Details are not described herein again.

S650: The core network device determines, based on a predicted network transmission capability and the predicted data feature, to control current data of a first terminal device.

For descriptions of step S650, refer to step S230 in FIG. 2. Details are not described herein again.

When the core network device determines to control the current data of the first terminal device, the following possible manners may be included.

Manner 1: The core network device performs an operation of controlling the current data of the first terminal device, and the method procedure shown in FIG. 4 further includes the following step.

S461: The core network device performs the operation of controlling the current data of the first terminal device.

Manner 2: The access network device performs an operation of controlling the current data of the first terminal device, and the method procedure shown in FIG. 4 further includes the following steps.

S462: The core network device sends control information #1 to the access network device, and correspondingly, the access network device receives the control information #1 from the core network device.

S463: The access network device performs the operation of controlling the current data of the first terminal device.

Manner 3: The first terminal device performs an operation of controlling the current data of the first terminal device, and the method procedure shown in FIG. 4 further includes the following steps.

S464: The core network device sends control information #2 to the first terminal device, and correspondingly, the terminal device receives the control information #2 from the core network device.

S465: The first terminal device performs the operation of controlling the current data of the first terminal device.

For step S661 to step S665, refer to the descriptions of step S461 to step S465 in FIG. 4. Details are not described herein again.

Implementation 3: The first communication apparatus shown in FIG. 2 is an access network device, and the predicted network transmission capability includes a predicted first network transmission capability and a predicted second network transmission capability. A device for determining the first network transmission capability is an access network device, and a device for determining the second network transmission capability and the predicted data feature is a core network device. In addition, a device that performs the operation of controlling the current data of the first terminal device includes but is not limited to the core network device, the access network device, or the first terminal device.

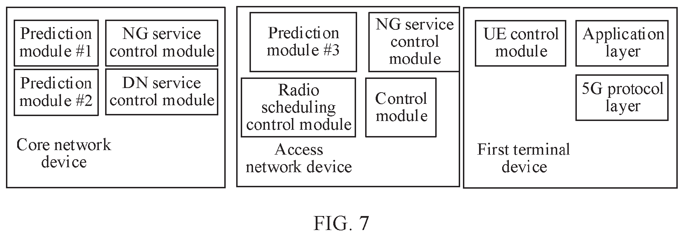

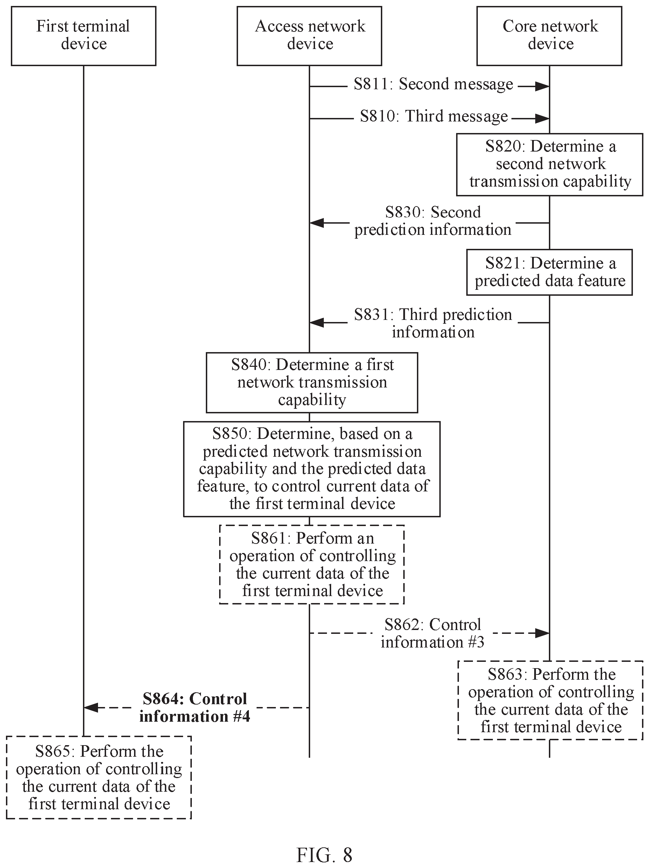

With reference to FIG. 7 and FIG. 8, the following describes in detail how to reduce the probability of packet loss or long delays in a case shown in Implementation 3.

FIG. 7 is a diagram of a network framework including a core network device, an access network device, and a first terminal device in a case shown in Implementation 3.

Specifically, in the case shown in Implementation 3, the core network device determines the second network transmission capability and the predicted data feature. Therefore, the core network device includes a prediction module #1 (for example, a prediction module #1 included in the core network device in FIG. 7) configured to determine the second network transmission capability, and a prediction module #2 (for example, a prediction module #2 included in the access network device in FIG. 7) configured to determine the predicted data feature. The prediction module #2 may be understood as a twin entity used for prediction. In addition, in the case shown in Implementation 3, the core network device may be further configured to perform the operation of controlling the current data of the first terminal device. Therefore, the core network device may further include an NG service control module and a DN service control module (for example, an NG service control module and a DN service control module that are included in the core network device in FIG. 7) that are configured to perform the operation of controlling the current data of the first terminal device.

In the case shown in Implementation 3, the core network device determines, based on the predicted network transmission capability and the predicted data feature, whether to control the current data of the first terminal device. Therefore, the core network device includes a control module (for example, a control module included in the core network device in FIG. 7) configured to determine whether to control the current data of the first terminal device. In addition, the access network device determines the first network transmission capability. Therefore, the access network device includes a prediction module #3 (for example, a prediction module #3 included in the access network device in FIG. 7) configured to determine the first network transmission capability. In the case shown in Implementation 3, the access network device may be further configured to perform the operation of controlling the current data of the first terminal device. Therefore, the access network device may further include a radio scheduling control module and an NG service control module (for example, a radio scheduling control module and an NG service control module that are included in the access network device in FIG. 7) that are configured to control the current data of the first terminal device.

In the case shown in Implementation 3, the first terminal device may be configured to perform the operation of controlling the current data of the first terminal device. Therefore, the terminal device may further include a UE control module (for example, a UE control module included in the terminal device in FIG. 7) configured to control the current data of the first terminal device. In addition, the terminal device further includes an application layer and a protocol layer (for example, an application layer and a 5G protocol layer that are included in the terminal device in FIG. 7).

FIG. 8 is a schematic flowchart of still another communication method according to this application. For the case shown in Implementation 3, the method includes the following steps.

S811: An access network device sends a second message to a core network device, and correspondingly, the core network device receives the second message from the access network device.

For step S811, refer to the descriptions of step S212 in FIG. 2. Details are not described herein again.

S810: The access network device sends a third message to the core network device, and correspondingly, the core network device receives the third message from the access network device.

For step S810, refer to the descriptions of step S221 in FIG. 2. Details are not described herein again.

S820: The core network device determines a second network transmission capability.

Specifically, for a manner of determining the second network transmission capability by the core network device, refer to the foregoing descriptions of determining the second network transmission capability by the first communication apparatus shown in FIG. 2. Details are not described herein again.

S821: The core network device determines a predicted data feature.

Specifically, for a manner of determining the predicted data feature by the core network device, refer to the foregoing descriptions of determining the predicted data feature by the first communication apparatus shown in FIG. 2. Details are not described herein again.

S830: The core network device sends second prediction information to the access network device, and correspondingly, the core network device receives the second prediction information from the access network device.

S831: The core network device sends third prediction information to the access network device, and correspondingly, the core network device receives the third prediction information from the access network device.

S840: The access network device determines a first network transmission capability.

Specifically, for a manner of determining the first network transmission capability by the access network device, refer to the foregoing descriptions of determining the first network transmission capability by the first communication apparatus shown in FIG. 2. Details are not described herein again.

S850: The access network device determines, based on a predicted network transmission capability and the predicted data feature, to control current data of a first terminal device.

For descriptions of step S850, refer to step S230 in FIG. 2. Details are not described herein again.

When the access network device determines to control the current data of the first terminal device, the following possible manners may be included.

Manner 1: The access network device performs an operation of controlling the current data of the first terminal device, and the method procedure shown in FIG. 8 further includes the following step.

S861: The access network device performs the operation of controlling the current data of the first terminal device.

For descriptions of step S861, refer to step S231 in FIG. 2. Details are not described herein again.

Manner 2: The core network device performs network control, and the method procedure shown in FIG. 8 further includes the following steps.

S862: The access network device sends control information #3 to the core network device, and correspondingly, the core network device receives the control information #3 from the access network device.

For step S862, refer to the descriptions of step S232 in FIG. 2. The control information #3 is equivalent to the foregoing control information in step S232, and the core network device is equivalent to the foregoing second communication apparatus. Details are not described herein again.

S863: The core network device performs an operation of controlling the current data of the first terminal device.

For descriptions of step S863, refer to step S233 in FIG. 2. Details are not described herein again.

Manner 3: The first terminal device performs an operation of controlling the current data of the first terminal device, and the method procedure shown in FIG. 8 further includes the following steps.

S864: The access network device sends control information #4 to the first terminal device, and correspondingly, the first terminal device receives the control information #4 from the access network device.

For step S864, refer to the descriptions of step S232 in FIG. 2. The control information #4 is equivalent to the foregoing control information in step S232, and the first terminal device is equivalent to the foregoing second communication apparatus. Details are not described herein again.

S865: The terminal device performs the operation of controlling the current data of the first terminal device.

For descriptions of step S865, refer to step S233 in FIG. 2. Details are not described herein again.

Implementation 4: The first communication apparatus shown in FIG. 2 is an access network device, and the predicted network transmission capability includes a predicted first network transmission capability and a predicted second network transmission capability. A device for determining the first network transmission capability and the predicted data feature is an access network device, and a device for determining the second network transmission capability is a core network device. In addition, a device that performs the operation of controlling the current data of the first terminal device includes but is not limited to the core network device, the access network device, or the first terminal device.

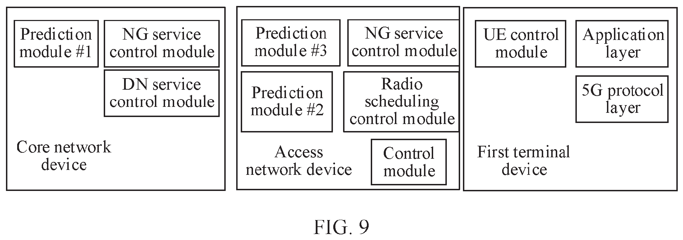

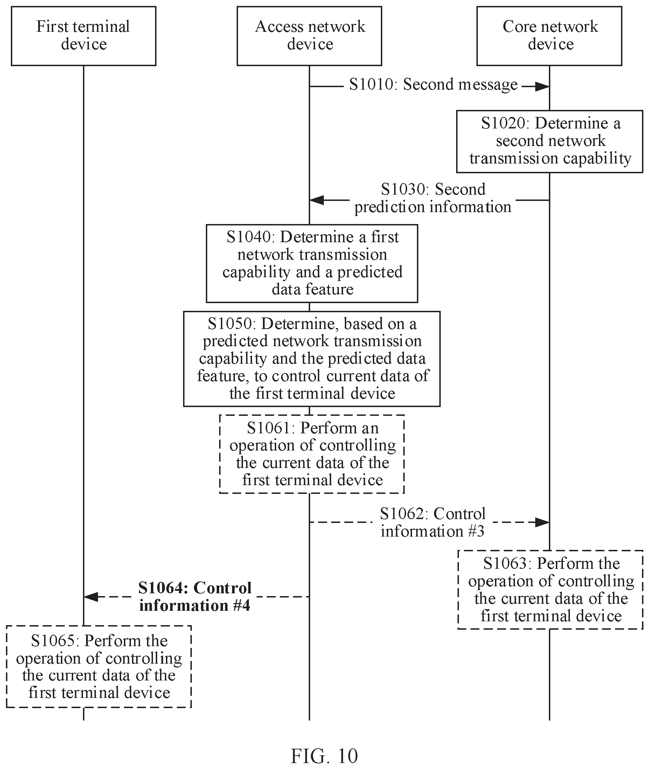

With reference to FIG. 9 and FIG. 10, the following describes in detail how to reduce the probability of packet loss or long delays in a case shown in Implementation 4.

FIG. 9 is a diagram of a network framework including a core network device, an access network device, and a first terminal device in a case shown in Implementation 4.

Specifically, in the case shown in Implementation 4, the core network device determines a second network transmission capability. Therefore, the core network device includes a prediction module #1 (for example, a prediction module #1 included in the core network device in FIG. 9) configured to determine the second network transmission capability. In addition, in the case shown in Implementation 4, the core network device may be further configured to perform the operation of controlling the current data of the first terminal device. Therefore, the core network device may further include an NG service control module and a DN service control module (for example, an NG service control module and a DN service control module that are included in the core network device in FIG. 9) that are configured to perform the operation of controlling the current data of the first terminal device.

In the case shown in Implementation 4, the core network device determines, based on the predicted network transmission capability and the predicted data feature, whether to control the current data of the first terminal device. Therefore, the core network device includes a control module (for example, a control module included in the core network device in FIG. 9) configured to determine whether to control the current data of the first terminal device. In addition, the access network device determines the first network transmission capability and the predicted data feature. Therefore, the access network device includes a prediction module #3 (for example, a prediction module #3 included in the access network device in FIG. 9) configured to determine the first network transmission capability, and a prediction module #2 (for example, a prediction module #2 included in the access network device in FIG. 9) configured to determine the predicted data feature. The prediction module #2 may be understood as a twin entity used for prediction. In the case shown in Implementation 4, the access network device may be further configured to perform the operation of controlling the current data of the first terminal device. Therefore, the access network device may further include a radio scheduling control module and an NG service control module (for example, a radio scheduling control module and an NG service control module that are included in the access network device in FIG. 9) that are configured to control the current data of the first terminal device.

In the case shown in Implementation 4, the first terminal device may be configured to perform the operation of controlling the current data of the first terminal device. Therefore, the terminal device may further include a UE control module (for example, a UE control module included in the terminal device in FIG. 9) configured to control the current data of the first terminal device. In addition, the terminal device further includes an application layer and a protocol layer (for example, an application layer and a 5G protocol layer that are included in the terminal device in FIG. 7).

FIG. 10 is a schematic flowchart of still another communication method according to this application. For the case shown in Implementation 4, the method includes the following steps.

S1010: An access network device sends a second message to a core network device, and correspondingly, the core network device receives the second message from the access network device.

For step S1010, refer to the descriptions of step S212 in FIG. 2. Details are not described herein again.

S1020: The core network device determines a second network transmission capability.

Specifically, for a manner of determining the second network transmission capability by the core network device, refer to the foregoing descriptions of determining the second network transmission capability by the first communication apparatus shown in FIG. 2. Details are not described herein again.

S1030: The core network device sends second prediction information to the access network device, and correspondingly, the core network device receives the second prediction information from the access network device.

S1040: The access network device determines a first network transmission capability and a predicted data feature.

S1050: The access network device determines, based on a predicted network transmission capability and the predicted data feature, to control current data of a first terminal device.

For descriptions of step S1050, refer to step S230 in FIG. 2. Details are not described herein again.

When the access network device determines to control the current data of the first terminal device, the following possible manners may be included.

Manner 1: The access network device performs an operation of controlling the current data of the first terminal device, and the method procedure shown in FIG. 10 further includes the following step.

S1061: The access network device performs the operation of controlling the current data of the first terminal device. Manner 2: The core network device performs network control, and the method procedure shown in FIG. 10 further includes the following steps.

S1062: The access network device sends control information #3 to the core network device, and correspondingly, the core network device receives the control information #3 from the access network device.

S1063: The core network device performs an operation of controlling the current data of the first terminal device.

Manner 3: The first terminal device performs an operation of controlling the current data of the first terminal device, and the method procedure shown in FIG. 8 further includes the following steps.

S1064: The access network device sends control information #4 to the first terminal device, and correspondingly, the first terminal device receives the control information #4 from the access network device.

S1065: The terminal device performs the operation of controlling the current data of the first terminal device.

For step S1061 to step S1065, refer to the descriptions of step S861 to step S865 in FIG. 8. Details are not described herein again.

It should be noted that Implementation 1 to Implementation 4 are merely examples for describing possible implementations of the communication method shown in FIG. 2, and do not constitute any limitation on the protection scope of this application. Another manner of controlling packet loss and/or a delay of the current data of the terminal device based on a network capability and a data feature of the terminal device in a future period of time also falls within the protection scope of this application.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by the device (for example, the first communication apparatus and the second communication apparatus) may alternatively be implemented by a component (for example, a chip or a circuit) of the device.

It may be further understood that some optional features in embodiments of this application may be independent of other features in some scenarios, or may be combined with other features in some scenarios. This is not limited.

The foregoing describes in detail, with reference to FIG. 2, the communication method provided in embodiments of this application. The foregoing communication method is mainly described from perspectives of the first communication apparatus and the second communication apparatus. It may be understood that, to implement the foregoing functions, the first communication apparatus and the second communication apparatus include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

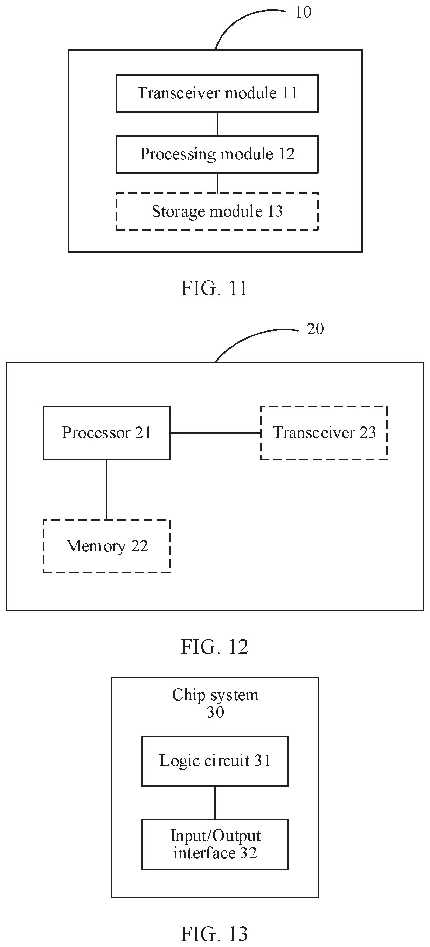

The following describes in detail communication apparatuses provided in embodiments of this application with reference to FIG. 11 to FIG. 13. It should be understood that descriptions of apparatus embodiments correspond to the descriptions of the method embodiments. Therefore, for content that is not described in detail, refer to the foregoing method embodiments. For brevity, details of a part of content are not described again.

In embodiments of this application, functional modules of a transmit end device or a receive end device may be divided based on the foregoing method examples. For example, functional modules may be divided based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

FIG. 11 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing; or the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement actions of a device in the foregoing method embodiments.

In a design, the apparatus 10 may correspond to the access network device in the foregoing method embodiments, or may be a component (for example, a chip) of the access network device.

The apparatus 10 may implement corresponding steps or procedures performed by the access network device in the foregoing method embodiments. The transceiver module 11 may be configured to perform receiving and sending related operations of the access network device in the foregoing method embodiments, and the processing module 12 may be configured to perform a processing-related operation of the access network device in the foregoing method embodiments.

In a possible implementation, the processing module 12 is configured to: obtain a predicted network transmission capability for data of a first terminal device; and obtain a predicted data feature for the data of the first terminal device. The processing module 12 is configured to determine, based on the predicted network transmission capability and the predicted data feature, to control current data of the first terminal device.

In another possible implementation, the transceiver module 11 is configured to receive control information, where the control information indicates to control the current data of the first terminal device. The processing module 12 is configured to control a rate, a delay, or packet loss of the current data of the first terminal device based on the control information, where the control information is determined based on the predicted network transmission capability for the data of the first terminal device and the predicted data feature for the data of the first terminal device.

When the apparatus 10 is configured to perform the method in FIG. 2, the transceiver module 11 may be configured to perform steps of sending and receiving information in the method, for example, step S211, step S212, and step S232. The processing module 12 may be configured to perform a processing step in the method, for example, step S210, step S220, step S230, and step S231. Alternatively, the processing module 12 may be configured to perform a processing step in the method, for example, step S233.

When the apparatus 10 is configured to perform the method in FIG. 4, the transceiver module 11 may be configured to perform steps of receiving and sending information in the method, for example, step S410, step S430, step S462, and step S464; and the processing module 12 may be configured to perform a processing step in the method, for example, step S420 and step S463.

When the apparatus 10 is configured to perform the method in FIG. 6, the transceiver module 11 may be configured to perform steps of receiving and sending information in the method, for example, step S610, step S611, step S630, step S631, step S662, and step S664; and the processing module 12 may be configured to perform a processing step in the method, for example, step S620, step S621, and step S663.

When the apparatus 10 is configured to perform the method in FIG. 8, the transceiver module 11 may be configured to perform steps of receiving and sending information in the method, for example, step S810, step S811, step S830, step S831, step S862, and step S864; and the processing module 12 may be configured to perform a processing step in the method, for example, step S840, step S850, and step S861.

When the apparatus 10 is configured to perform the method in FIG. 10, the transceiver module 11 may be configured to perform steps of receiving and sending information in the method, for example, step S1010, step S1030, step S1062, and step S1064; and the processing module 12 may be configured to perform a processing step in the method, for example, step S1040, step S1050, and step S1061.

It should be understood that a specific process in which the units perform the foregoing corresponding steps is described in detail in the foregoing method embodiments, and for brevity, details are not described herein.

In another design, the apparatus 10 may correspond to the core network device in the foregoing method embodiments, or may be a component (for example, a chip) of the core network device.

The apparatus 10 may implement corresponding steps or procedures performed by the core network device in the foregoing method embodiments. The transceiver module 11 may be configured to perform receiving and sending related operations of the core network device in the foregoing method embodiments, and the processing module 12 may be configured to perform a processing-related operation of the core network device in the foregoing method embodiments.

In a possible implementation, the processing module 12 is configured to: obtain a predicted network transmission capability for data of a first terminal device; and obtain a predicted data feature for the data of the first terminal device. The processing module 12 is configured to determine, based on the predicted network transmission capability and the predicted data feature, to control current data of the first terminal device.

In another possible implementation, the transceiver module 11 is configured to receive control information, where the control information indicates to control the current data of the first terminal device. The processing module 12 is configured to control a rate, a delay, or packet loss of the current data of the first terminal device based on the control information, where the control information is determined based on the predicted network transmission capability for the data of the first terminal device and the predicted data feature for the data of the first terminal device.

When the apparatus 10 is configured to perform the method in FIG. 2, the transceiver module 11 may be configured to perform steps of sending and receiving information in the method, for example, step S211, step S212, and step S232. The processing module 12 may be configured to perform a processing step in the method, for example, step S210, step S220, step S230, and step S231. Alternatively, the processing module 12 may be configured to perform a processing step in the method, for example, step S233.

When the apparatus 10 is configured to perform the method in FIG. 4, the transceiver module 11 may be configured to perform steps of receiving and sending information in the method, for example, step S410, step S430, step S462, and step S464; and the processing module 12 may be configured to perform a processing step in the method, for example, step S440, step S450, and step S461.

When the apparatus 10 is configured to perform the method in FIG. 6, the transceiver module 11 may be configured to perform steps of receiving and sending information in the method, for example, step S810, step S811, step S830, step S831, and step S862; and the processing module 12 may be configured to perform a processing step in the method, for example, step S640, step S650, and step S661.

When the apparatus 10 is configured to perform the method in FIG. 8, the transceiver module 11 may be configured to perform steps of receiving and sending information in the method, for example, step S810, step S811, step S830, step S831 and step S862; and the processing module 12 may be configured to perform a processing step in the method, for example, step S820, step S821, and step S863.

When the apparatus 10 is configured to perform the method in FIG. 10, the transceiver module 11 may be configured to perform steps of receiving and sending information in the method, for example, step S1010, step S1030, and step S1062; and the processing module 12 may be configured to perform a processing step in the method, for example, step S1020 and step S1063.

It should be understood that a specific process in which the units perform the foregoing corresponding steps is described in detail in the foregoing method embodiments, and for brevity, details are not described herein.

In still another design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments, and the processing module 12 may be configured to perform a processing-related operation of the terminal device in the foregoing method embodiments.

In a possible implementation, the transceiver module 11 is configured to receive control information, where the control information indicates to control current data of a first terminal device. The processing module 12 is configured to control a rate, a delay, or packet loss of the current data of the first terminal device based on the control information, where the control information is determined based on a predicted network transmission capability for data of the first terminal device and a predicted data feature for the data of the first terminal device.

When the apparatus 10 is configured to perform the method in FIG. 2, the transceiver module 11 may be configured to perform steps of receiving and sending information in the method, for example, step S232, and the processing module 12 may be configured to perform a processing step in the method, for example, step S233.

When the apparatus 10 is configured to perform the method in FIG. 4, the transceiver module 11 may be configured to perform steps of receiving and sending information in the method, for example, step S464, and the processing module 12 may be configured to perform a processing step in the method, for example, step S465.

When the apparatus 10 is configured to perform the method in FIG. 6, the transceiver module 11 may be configured to perform steps of receiving and sending information in the method, for example, step S664, and the processing module 12 may be configured to perform a processing step in the method, for example, step S665.

When the apparatus 10 is configured to perform the method in FIG. 8, the transceiver module 11 may be configured to perform steps of receiving and sending information in the method, for example, step S864, and the processing module 12 may be configured to perform a processing step in the method, for example, step S865.

When the apparatus 10 is configured to perform the method in FIG. 10, the transceiver module 11 may be configured to perform steps of receiving and sending information in the method, for example, step S1064, and the processing module 12 may be configured to perform a processing step in the method, for example, step S1065.

It should be understood that a specific process in which the units perform the foregoing corresponding steps is described in detail in the foregoing method embodiments, and for brevity, details are not described herein.

It should be further understood that the apparatus 10 herein is presented in a form of functional module. The term "module" herein may be an application specific integrated circuit (application specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the first communication apparatus) in the foregoing method. The function may be implemented by hardware, or may be implemented by hardware executing corresponding software. The hardware or the software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit like the processing module may be replaced with a processor, to respectively perform receiving and sending operations and related processing operations in the method embodiments.

In addition, the transceiver module 11 may alternatively be a transceiver circuit (for example, may include a receiving circuit and a sending circuit), and the processing module may be a processing circuit.

FIG. 12 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 12, the apparatus 20 further includes the memory 22, and the memory 22 is configured to store the computer program or instructions and/or data. The memory 22 and the processor 21 may be integrated together, or may be disposed separately. Optionally, there are one or more memories 22.

Optionally, as shown in FIG. 12, the apparatus 20 further includes a transceiver 23. The transceiver 23 is configured to: receive and/or send a signal. For example, the processor 21 is configured to control the transceiver 23 to receive a signal and/or send a signal.

In a solution, the apparatus 20 is configured to implement operations performed by the first communication apparatus or the second communication apparatus in the foregoing method embodiments.

It should be understood that, the processor mentioned in embodiments of this application may be a central processing unit (central processing unit, CPU), and may further be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described herein is intended to include, but is not limited to, these and any other appropriate type of memory.

FIG. 13 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first communication apparatus or the second communication apparatus in the foregoing method embodiments.

For example, the logic circuit 31 is configured to implement processing-related operations performed by the first communication apparatus or the second communication apparatus in the foregoing method embodiments, and the input/output interface 32 is configured to implement sending and/or receiving-related operations performed by the terminal device in the foregoing method embodiments.

An embodiment of this application further provides a computer-readable storage medium. The computer-readable storage medium stores computer instructions for implementing the method performed by a device in the foregoing method embodiments.

For example, when a computer program is executed by a computer, the computer is caused to implement the method performed by the first communication apparatus or the second communication apparatus in the foregoing method embodiments.

An embodiment of this application further provides a computer program product, including instructions. When the instructions are executed by a computer, the method performed by the first communication apparatus or the second communication apparatus in the foregoing method embodiments is implemented.

An embodiment of this application further provides a communication system, including the first communication apparatus and the second communication apparatus.

For explanations and beneficial effects of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining a predicted network transmission capability for data of a first terminal device;
obtaining a predicted data feature for the data of the first terminal device; and
determining, based on the predicted network transmission capability and the predicted data feature, to control current data of the first terminal device.

2. The method according to claim 1, wherein the predicted network transmission capability comprises at least one of:
a predicted network transmission assurance capability for a rate, a packet loss rate, or a delay of the data of the first terminal device.

3. The method according to claim 1 or 2, wherein the predicted network transmission capability comprises:
a predicted first network transmission capability and/or a predicted second network transmission capability, wherein
the first network transmission capability is a network transmission capability between an access network device and the first terminal device, and the second network transmission capability is a network transmission capability between the access network device and a core network device.

4. The method according to claim 3, wherein the obtaining the predicted network transmission capability comprises:
determining the first network transmission capability and/or the second network transmission capability; or
receiving first prediction information and/or second prediction information, wherein the first prediction information indicates the first network transmission capability, and the second prediction information indicates the second network transmission capability; or
determining the first network transmission capability, and receiving the second prediction information; or
determining the second network transmission capability, and receiving the first prediction information.

5. The method according to claim 4, wherein the determining the first network transmission capability comprises:
determining the first network transmission capability based on one or more of the following information:
a radio environment in which the first terminal device is located, channel quality of the first terminal device, a radio scheduling capability of the access network device for the data of the first terminal device, a software processing resource or a hardware processing resource of the access network device for the data of the first terminal device, or a quantity of terminal devices connected to the access network device, wherein
the first terminal device is one of the terminal devices connected to the access network device.

6. The method according to claim 4 or 5, wherein the determining the second network transmission capability comprises:
determining the second network transmission capability based on one or more of the following information:
a forwarding capability of the core network device for the data of the first terminal device, a software processing resource or a hardware processing resource of the core network device for the data of the first terminal device, or a quantity of terminal devices managed by the core network device, wherein
the first terminal device is one of the terminal devices managed by the core network device.

7. The method according to any one of claims 4 to 6, wherein before receiving the first prediction information, the method further comprises:
sending a first message, wherein the first message indicates to report the first prediction information.

8. The method according to any one of claims 4 to 7, wherein before receiving the second prediction information, the method further comprises:
sending a second message, wherein the second message indicates to report the second prediction information.

9. The method according to any one of claims 1 to 8, wherein the obtaining the predicted data feature comprises:
determining the predicted data feature; or
receiving third prediction information, wherein the third prediction information indicates the predicted data feature.

10. The method according to claim 9, wherein before receiving the third prediction information, the method further comprises:
sending a third message, wherein the third message indicates to report the third prediction information.

11. The method according to claim 9 or 10, wherein the determining the predicted data feature comprises:
determining the predicted data feature based on a data feature of historical data of the first terminal device and a prediction algorithm.

12. The method according to any one of claims 1 to 11, wherein the predicted data feature comprises:
a predicted first rate, a predicted first packet loss rate, or a predicted first delay related to the data of the first terminal device.

13. The method according to any one of claims 1 to 12, wherein the determining, based on the predicted network transmission capability and the predicted data feature, to control the current data of the first terminal device comprises:
determining to control the current data of the first terminal device when it is determined, based on the predicted network transmission capability and the predicted data feature, that the predicted network transmission capability cannot guarantee a requirement of the predicted data feature.

14. The method according to any one of claims 1 to 13, wherein the method further comprises:
performing an operation of controlling the current data of the first terminal device; and/or
sending control information, wherein the control information indicates to control the current data of the first terminal device.

15. The method according to claim 14, wherein the performing the operation of controlling the current data of the first terminal device comprises:
delaying delivery of the current data of the first terminal device; or
discarding the current data of the first terminal device; or
discarding feedback information for the current data of the first terminal device.

16. The method according to claim 14 or 15, wherein the control information comprises at least one of the following information:
rate information, delay amount information, or packet loss amount information.

17. A communication method, comprising:
receiving control information, wherein the control information indicates to control current data of a first terminal device; and
controlling a rate, a delay, or packet loss of the current data of the first terminal device based on the control information, wherein
the control information is determined based on a predicted network transmission capability for data of the first terminal device and a predicted data feature for the data of the first terminal device.

18. The method according to claim 17, wherein the control information comprises at least one of the following information:
rate information, delay amount information, or packet loss amount information.

19. The method according to claim 18, wherein if the control information comprises the rate information, the method further comprises:
controlling the rate of the current data of the first terminal device to be less than or equal to a rate indicated by the rate information; and/or
if the control information comprises the delay amount information, the method further comprises:
delaying delivery of the current data of the first terminal device, so as to control the delay of the current data of the first terminal device to be greater than or equal to a delay indicated by the delay amount information; and/or
if the control information comprises the packet loss amount information, the method further comprises:
discarding the current data of the first terminal device, discarding feedback information for the current data of the first terminal device, or sending a negative acknowledgment NACK for the current data of the first terminal device, so as to control the packet loss amount of the current data of the first terminal device to be greater than or equal to a packet loss amount indicated by the packet loss amount information.

20. The method according to any one of claims 17 to 19, wherein the method further comprises:
receiving a first message, wherein the first message indicates to report first prediction information, the first prediction information indicates a first network transmission capability, and the first network transmission capability is a predicted network transmission capability that is of an access network device and that is for the data of the first terminal device; and
sending the first prediction information.

21. The method according to claim 20, wherein the method further comprises:
determining the first network transmission capability based on one or more of the following information:
a radio environment in which the first terminal device is located, channel quality of the first terminal device, a radio scheduling capability of the access network device for the data of the first terminal device, a software processing resource or a hardware processing resource of the access network device for the data of the first terminal device, or a quantity of terminal devices connected to the access network device, wherein
the first terminal device is one of the terminal devices connected to the access network device.

22. The method according to any one of claims 17 to 21, wherein the method further comprises:
receiving a second message, wherein the second message indicates to report second prediction information, the second prediction information indicates a second network transmission capability, and the second network transmission capability is a predicted network transmission capability that is of a core network device and that is for the data of the first terminal device; and
sending the second prediction information.

23. The method according to claim 22, wherein the method further comprises:
determining the second network transmission capability based on one or more of the following information:
a forwarding capability of the core network device for the data of the first terminal device, a software processing resource or a hardware processing resource of the core network device for the data of the first terminal device, or a quantity of terminal devices managed by the core network device, wherein
the first terminal device is one of the terminal devices managed by the core network device.

24. The method according to any one of claims 17 to 21, wherein the method further comprises:
receiving a third message, wherein the third message indicates to report third prediction information, and the third prediction information indicates the predicted data feature for the data of the first terminal device.

25. The method according to claim 24, wherein the method further comprises:
determining the predicted data feature based on a data feature of historical data of the first terminal device and a prediction algorithm.

26. The method according to claim 24 or 25, wherein the predicted data feature comprises:
a predicted first rate, a predicted first packet loss rate, or a predicted first average delay related to the data of the first terminal device.

27. A communication apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 26.

28. A computer-readable storage medium, wherein the computer-readable storage medium stores a computer program or instructions, and when the computer program or the instructions are run on a computer, the computer is caused to perform the method according to any one of claims 1 to 26.

29. A chip system, comprising a processor, configured to invoke a computer program from a memory and run the computer program, to cause a communication device on which the chip system is installed to perform the method according to any one of claims 1 to 26.

30. A computer program product, wherein when the computer program product runs on a computer, the computer is caused to perform the method according to any one of claims 1 to 26.
